(19) [European Patent Office logo] Europäisches Patentamt / European Patent Office / Office européen des brevets

(11) **EP 3 857 986 B1**

(12) # EUROPEAN PATENT SPECIFICATION

(45) Date of publication and mention of the grant of the patent:
**07.02.2024 Bulletin 2024/06**

(21) Application number: **19778950.6**

(22) Date of filing: **24.09.2019**

(51) International Patent Classification (IPC):
**H04W 52/02** (2009.01)    **H04W 76/27** (2018.01)

(52) Cooperative Patent Classification (CPC):
**H04W 52/0216; H04W 76/27; H04W 76/28;**
**Y02D 30/70**

(86) International application number:
**PCT/EP2019/075764**

(87) International publication number:
**WO 2020/064773 (02.04.2020 Gazette 2020/14)**

---

(54) **STATE TRANSITION PROCESSES FOR WIRELESS DEVICE POWER SAVINGS**

ZUSTANDSÜBERGANGSVERFAHREN FÜR ENERGIESPAREN BEI DRAHTLOSEN VORRICHTUNGEN

PROCÉDÉS DE TRANSITION D'ÉTAT POUR DES ÉCONOMIES D'ÉNERGIE DE DISPOSITIF SANS FIL

---

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.09.2018 US 201862738978 P**

(43) Date of publication of application:
**04.08.2021 Bulletin 2021/31**

(73) Proprietor: **Telefonaktiebolaget LM Ericsson (publ)**
**164 83 Stockholm (SE)**

(72) Inventors:
• **MALEKI, Sina**
  214 22 Malmö (SE)
• **NADER, Ali**
  212 42 Malmö (SE)
• **REIAL, Andres**
  211 17 Malmö (SE)
• **MATHECKEN, Pramod, Jacob**
  23435 Lomma (SE)

(74) Representative: **Ericsson**
**Patent Development**
**Torshamnsgatan 21-23**
**164 80 Stockholm (SE)**

(56) References cited:
WO-A1-2017/196146    WO-A1-2018/030866
WO-A1-2018/131956

• **SAMSUNG: "Remaining issues of RRC connection control from INACTIVE", 3GPP DRAFT; R2-1711664 REMAINING ISSUES OF RRC CONNECTION CONTROL FROM INACTIVE, 3RD GENERATION PARTNERSHIP PROJECT (3GPP), MOBILE COMPETENCE CENTRE ; 650, ROUTE DES LUCIOLES ; F-06921 SOPHIA-ANTIPOLI , vol. RAN WG2, no. Prague, Czech Republic; 20171009 - 20171013 8 October 2017 (2017-10-08), XP051343623, Retrieved from the Internet: URL:http://www.3gpp.org/ftp/Meetings_3GPP_ SYNC/RAN2/Docs/ [retrieved on 2017-10-08]**
• **QUALCOMM INCORPORATED: "RRC INACTIVE State aspects for E-UTRAN connected to 5GCN", 3GPP DRAFT; R2-1802064_RRC_INACTIVE_ASPECTS_OF_ LTE CONNECTIVITY TO 5G-CN_V1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS C , vol. RAN WG2, no. Athens, Greece; 15 February 2018 (2018-02-15), XP051399820, Retrieved from the Internet: URL:http://www.3gpp.org/ftp/tsg%5Fran/WG2% 5FRL2/TSGR2%5F101/Docs/ [retrieved on 2018-02-15]**

---

# Description

## TECHNICAL FIELD

The present disclosure relates to wireless communications, and in particular, to providing signaling associated with a wireless device transitioning to or remaining in an inactive mode/state such as an RRC_inactive mode/state or an RRC_idle mode/state.

## BACKGROUND

### NR

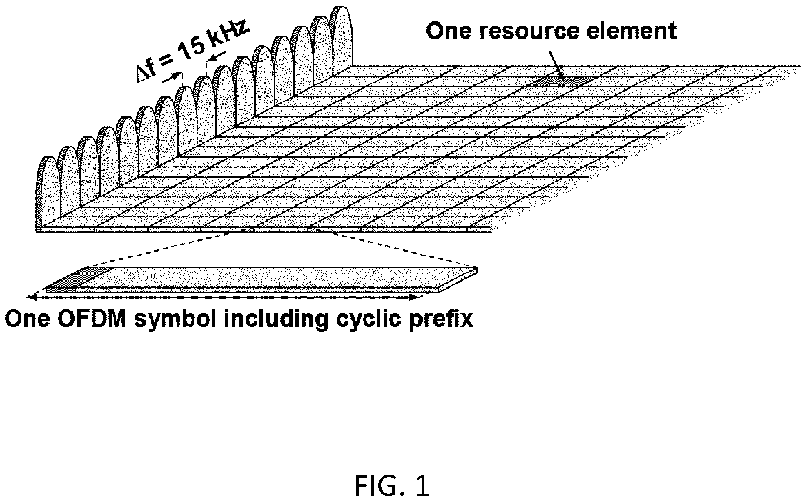

New radio (NR) standard in 3GPP (also referred to as 5G) is being designed to provide service for multiple use cases such as enhanced mobile broadband (eMBB), ultra-reliable and low latency communication (URLLC), and machine type communication (MTC). FIG. 1 is a diagram of an example radio resource in NR. Each of these services has different technical requirements. For example, the general requirement for eMBB is high data rate with moderate latency and moderate coverage, while URLLC service requires a low latency and high reliability transmission but perhaps for moderate data rates.

One of the solutions for low latency data transmission is shorter transmission time intervals. In NR in addition to transmission in a slot, a mini-slot transmission is also allowed to reduce latency. A mini-slot may consist of any number of 1 to 14 OFDM symbols. It should be noted that the concepts of slot and mini-slot are not specific to a specific service meaning that a mini-slot may be used for either eMBB, URLLC, or other services.

### Physical Channels

A downlink physical channel corresponds to a set of resource elements carrying information originating from higher layers. The following downlink physical channels are defined:

- Physical Downlink Shared Channel, PDSCH;
- Physical Broadcast Channel, PBCH; and
- Physical Downlink Control Channel, PDCCH.

PDSCH is the main physical channel used for unicast downlink data transmission, but also for transmission of RAR (random access response), certain system information blocks, and paging information. PBCH carries the basic system information, required by the wireless device to access the network. PDCCH is used for transmitting downlink control information (DCI), mainly scheduling decisions, required for reception of PDSCH, and for uplink scheduling grants enabling transmission on PUSCH.

An uplink physical channel corresponds to a set of resource elements carrying information originating from higher layers. The following uplink physical channels are defined:

- Physical Uplink Shared Channel, PUSCH;
- Physical Uplink Control Channel, PUCCH; and
- Physical Random Access Channel, PRACH.

PUSCH is the uplink counterpart to the PDSCH. PUCCH is used by wireless devices to transmit uplink control information, including HARQ acknowledgments, channel state information reports, etc. PRACH is used for random access preamble transmission.

An example contents of a DL DCI 1-0 is shown below.

Example contents of a DCI format 1_0 with CRC scrambled by C-RNTI/CS RNTI

- Identifier for DCI formats - 1 bit;

  - The value of this bit field is always set to 1, indicating a DL DCI format;

- Frequency domain resource assignment - $\left\lceil \log_2 (N_{RB}^{DL,BWP} (N_{RB}^{DL,BWP} + 1)/2) \right\rceil$ bits;

  - $N_{RB}^{DL,BWP}$ is the size of the active DL bandwidth part in case DCI format 1_0 is monitored in the wireless device specific search space and satisfying;

    - the total number of different DCI sizes configured to monitor is no more than 4 for the cell, and
    - the total number of different DCI sizes with C-RNTI configured to monitor is no more than 3 for the cell;

  otherwise, $N_{RB}^{DL,BWP}$ is the size of CORESET 0.

- Time domain resource assignment - 4 bits, for example, as defined in Subclause 5.1.2.1 of Third Generation Partnership Projection (3GPP) Technical Specification (TS) 38.214;
- VRB-to-PRB mapping - 1 bit according to Table 7.3.1.1.2-33 of, for example, 3GPP TS 38.214;
- Modulation and coding scheme - 5 bits, for example, as defined in Subclause 5.1.3 of 3GPP TS 38.214;
- New data indicator - 1 bit;
- Redundancy version - 2 bits, for example, as defined in Table 7.3.1.1.1-2 of 3GPP TS 38.214;
- HARQ process number - 4 bits;
- Downlink assignment index - 2 bits, for example, as defined in Subclause 9.1.3 of 3GPP TS 38.213], as counter DAI;
- TPC command for scheduled PUCCH - 2 bits, for example, as defined in Subclause 7.2.1 of 3GPP TS 38.213;

- PUCCH resource indicator - 3 bits, for example, as defined in Subclause 9.2.3 of 3GPP TS 38.213.
- PDSCH-to-HARQ_feedback timing indicator - 3 bits, for example, as defined in Subclause 9.2.3 of 3GPP TS 38.213.

Power saving

Wireless device power consumption is a metric for consideration. In general, significant power can be spent monitoring the PDCCH in LTE based on one DRX setting from LTE field logs. The situation can be similar in NR if similar DRX setting with traffic modeling is utilized, as the wireless device may need to perform blind detection in its configured control resource sets (CORESETs) to identify whether there is a PDCCH sent to it, and act accordingly. Techniques that can reduce unnecessary PDCCH monitoring or allowing the wireless device to go to sleep or wake-up only when required can be beneficial.

A wireless device in NR operates in various RRC modes; RRC_IDLE, RRC_INACTIVE, and RRC_CONNECTED mode. One of the main activities for a wireless device in RRC_CONNECTED mode is monitoring the PDCCH for potentially scheduled data on a PDSCH/PUSCH by the NW and/or network node.

During this activity, a wireless device may need to receive and decode the data possibly present in any/many locations of the configured search space. This decoding process, also known as blind decoding (BD), may include searching for the Downlink Control Information (DCI) commands addressed to the wireless device based on checking the CRC using its c-RNTI.

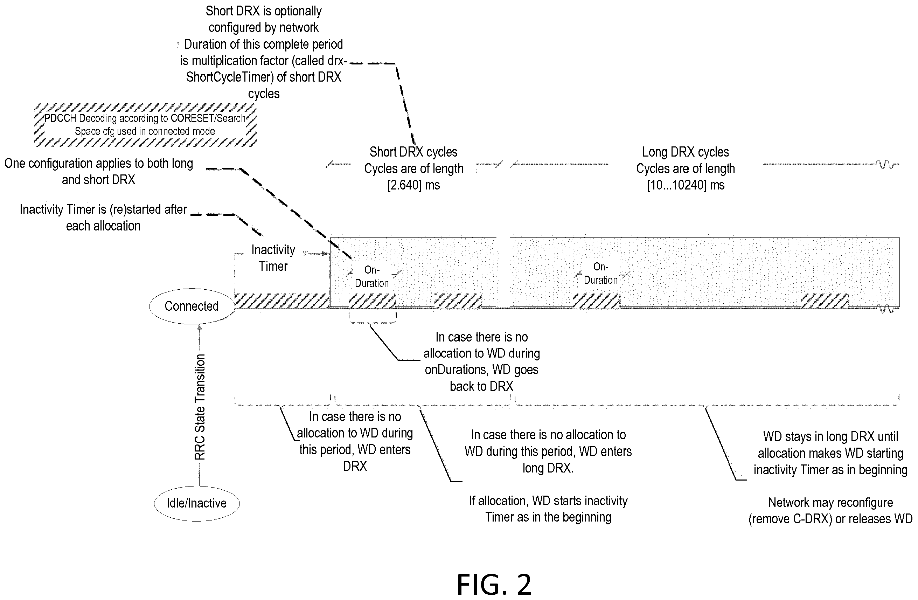

The connected-DRX (C-DRX) mechanism exists to enable putting the wireless device in a low-power mode for a considerably large fraction of the time when no traffic is transmitted to the wireless device. According to a configured periodicity, the wireless device wakes up to monitor the PDCCH which may or may not include an allocation. The period during which the wireless device is awake and monitoring the PDCCH is called On-Duration. If any DL/UL allocation is found during the On-Duration, the wireless device is kept awake for a period of time (Inactivity Timer running) during which it constantly monitors PDCCH. If the wireless device is not allocated any data during this time, the wireless device goes back to the C-DRX state, waking up occasionally during On-durations. C-DRX is illustrated in FIG. 2.

Typically, the C-DRX parameters are configured by RRC and there are some other DRX parameters including RTT related, HARQ related, etc. On-duration and the time duration when inactivity timer is running is also generally referred to as active time.

The following terms may be associated with a C-DRX operation:

- Active Time: Time during which the wireless device is performing a downlink/uplink transmission and also including the time specified by the Inactivity timer.
- Inactivity Timer: Refers to the period of time during which the wireless device remains inactive after a downlink or uplink transmission. Once this time expires the wireless device enters the C-DRX state.
- Inactive time: The time during which the wireless device is in a C-DRX state.
- C-DRX cycle: The periodic repetition of an On-duration followed by an Off-duration. During the On-duration, the wireless device wakes up and monitors for the PDCCH and during the Off-duration the wireless device is in a low-powered sleep state. (FIG. 2).

One aspect is that C-DRX functionality is configured by the RRC, which is typically operating on a slower scale than MAC or Physical layer. Thus, the C-DRX parameter settings, etc., cannot be changed quite adaptively through RRC configuration, especially if the wireless device has a mix of traffic types.

The document WO 2018/131956 A1 describes receiving, from a base station, a paging message for switching a mode of a terminal in a RRC inactive mode to an RRC idle mode, responsive to which an RRC message is transmitted to the base station, which then transmits an RRC connection release message, based on which the terminal transitions from the RRC inactive mode to the RRC idle mode.

The document US 2019/166553 A1 describes a method for entering early C-DRX or RRC-inactive state. Transitioning from an RRC connected state to an idle (or inactive) state is either responsive to explicit RRC signaling, explicit configuring of the RRC connection state by a base station or upon first expiry of a DRX-inactivity timer, which transitions a terminal to C-DRX or long C-DRX and subsequent expiry of a user-inactivity timer time transitioning to the inactive state.

The document EP 3 487 258 A1 describes a communication method of a base station comprising determining an RRC state transition condition of a terminal and transmitting information on the RRC state condition to the terminal. The RRC state transition condition includes one or more timers for the transition between RRC states or information indicating an RRC state to be changed. An RRC connected state comprises C-DRX. The time relates to a cycle for RRC state switching. Alternatively, an event trigger condition is configured by the base station.

The document R2-1711664 discusses RRC message formats for LTE state transitions from UE INACTIVE to UE IDLE or to UE INACTIVE in case of a RRC connection response message rejection by a gNB. It is proposed to send the response message indicating the target LTE state INACTIVE or IDLE on SRB0 in case the gNB does not have the LTE context and on SRB1 in case the gNB has the LTE context, without transiting to the full CONNECTED state inbetween. Sending the LTE to INACTIVE or IDLE state is performed in case of core overload situations or gNB congestion.

The document R2-1802064 lists RRC INACTIVE state transitioning signaling scenarios, in particular RRC_CONNECTED to RRC_INACTIVE transitions upon reception of an RRC connection release with RRC_INACTIVE indication, INACTIVE state entering upon RRC resume failure and an INACTIVE indication and RRC_INACTIVE to RRC_IDLE state transition through CONNECTED, upon RRC resume reject from an eNB or upon receiving CN paging.

SUMMARY

Some embodiments advantageously provide methods, systems, and apparatuses for providing signaling associated with a wireless device transitioning to or remaining in an inactive mode/state or an idle mode/state, for example, the RRC_inactive mode/state or RRC_idle mode/state. The scope of the invention is defined by the independent claims 1, 7, 10 and 12 as well as the dependent claims.

The disclosure provides multiple methods to enable the wireless device to move from the RRC_Connected state to the RRC_Inactive/RRC_Idle state without excessive RRC signaling, both statically and dynamically.

The disclosure proposes multiple methods to enable the wireless device to move from the RRC_Connected state to the RRC_Inactive state without excessive RRC signaling, both statically and dynamically.

Method 1:

In this method, the network/network node preconfigures, through RRC signaling either via broadcast or via dedicated signaling, the wireless device to move to the RRC_Inactive state after N cycles of the C-DRX during which time no PDCCH data was present. At the wireless device side, the wireless device keeps track of the N contiguous cycles of C-DRX during which the wireless device does not receive any dedicated DCI on the PDCCH.

Method 2:

In another embodiment, the network/network node can send the wireless device to RRC _Inactive using a go-to-inactive (GTI) signal if nothing is scheduled for the wireless device. This GTI-signal can be sent to the wireless device, for example, using a DCI that is sent over the PDCCH, or using a MAC CE. To help such an operation to be efficient, the network/network node may consider its buffer status and the buffer status report of the wireless device and then decide whether to send a GTI-signal to the wireless device.

Method 3:

In network/network node configurations where a wake-up signal (WUS) is used in RRC_Connected to signal to the wireless device that a scheduling PDCCH is present, the wireless device moves to RRC_Inactive state/RRC_Idle state after WUS has not been detected during M consecutive WUS occasions.

Note that optional Method 2 above is combined with the other method 1 or 3 mentioned above.

The method may be applied in the C-DRX or full connected mode.

According to the independent claims 12 of this aspect, a network node configured to communicate with a wireless device is provided. The network node includes processing circuitry configured to cause transmission of signaling associated with causing the wireless device to transition to or remain in one of a radio resource control, RRC,_Inactive state and RRC_Idle state. The signaling indicates a configuration that is configured to cause the wireless device to transition to or remain in one of a radio resource control, RRC,_Inactive state and RRC_Idle state if a predefined criterion is met. The predefined criterion defines a predefined number of connected mode discontinuous reception, C_DRX, cycles during which physical downlink control channel data for the wireless device has not been received, or the predefined criterion defines a predefined number of consecutive wake-up signal, WUS, occasions that have not been detected. According to one or more embodiments of this aspect, the signaling includes an inactive indication that is configured to cause the wireless device to transition to or remain in one of a radio resource control, RRC, Inactive state and RRC_Idle state. According to one or more embodiments of this aspect, the inactive indication is a go-to-inactive (GTI) indication included in downlink control information (DCI) or in a MAC CE.

According to one or more embodiments of this aspect, the GTI indication is signaled based at least in part on a buffer status of the wireless device. According to one or more embodiments of this aspect, the GTI signal is transmitted using one of a downlink control information, DCI, and a medium access control, MAC, control element, CE. According to one or more embodiments of this aspect, the transition is from a connected mode discontinuous reception, C_DRX, state to one of the RRC_Inactive state and RRC_Idle state. According to one or more embodiments of this aspect, the transition is from the RRC_Connected state to the one of RRC_Inactive state and RRC_Idle state. According to one or more embodiments of this aspect, the processing circuitry is further configured to receive an indication that the wireless device is refraining from transitioning to the RRC_Inactive mode based on the wireless device one of having data for transmission and expecting data for transmission within a predetermined time interval.

According to another aspect of the disclosure as specified by the independent claim 10, a wireless device configured to communicate with a network node is provided. The wireless device includes processing circuitry configured to: receive signaling associated with causing the wireless device to transition to or remain in one of a radio resource control, RRC,_Inactive state and RRC_Idle state, and transition to or remain in one of a radio resource control, RRC,_Inactive state and RRC_Idle state based at least in part on the signaling.

The signaling indicates a configuration configured to cause the wireless device to transition to or remain in one of a radio resource control, RRC,_Inactive state and RRC_Idle state if a predefined criterion is met. The predefined criterion defines a predefined number of connected mode discontinuous reception, C_DRX, cycles during which physical downlink control channel data for the wireless device has not been received, or the predefined criterion defines a predefined number of consecutive wake-up signal, WUS, occasions that have not been detected.

According to one or more embodiments of this aspect, the signaling includes an inactive indication that is configured to cause the wireless device to transition to or remain in one of a radio resource control, RRC,_Inactive state and RRC_Idle state. According to one or more embodiments of this aspect, the inactive indication is a go-to-inactive (GTI) indication included in downlink control information (DCI) or in a MAC CE. According to one or more embodiments of this aspect, the GTI indication is signaled based at least in part on a buffer status of the wireless device. According to one or more embodiments of this aspect, the GTI signal is transmitted using one of a downlink control information, DCI, and a medium access control, MAC, control element, CE.

According to one or more embodiments of this aspect, the transition is from a connected mode discontinuous reception, C_DRX, state to one of the RRC_Inactive state and RRC_Idle state. According to one or more embodiments of this aspect, the transition is from the RRC_Connected state to the one of RRC_Inactive state and RRC_Idle state.

According to another aspect of the disclosure as specified by the independent claim 7, a method implemented by a network node configured to communicate with a wireless device is provided. Transmission of signaling is caused where the signaling is associated with causing the wireless device to transition to or remain in one of a radio resource control, RRC,_Inactive state and RRC_Idle state.

The signaling indicates a configuration that is configured to cause the wireless device to transition to or remain in one of a radio resource control, RRC,_Inactive state and RRC_Idle state if a predefined criterion is met. The predefined criterion defines a predefined number of connected mode discontinuous reception, C_DRX, cycles during which physical downlink control channel data for the wireless device has not been received, or the predefined criterion defines a predefined number of consecutive wake-up signal, WUS, occasions that have not been detected.

According to one or more embodiments of this aspect, the signaling includes an inactive indication that is configured to cause the wireless device to transition to or remain in one of a radio resource control, RRC,_Inactive state and RRC_Idle state. According to one or more embodiments of this aspect, the inactive indication is a go-to-inactive (GTI) indication included in downlink control information (DCI) or in a MAC CE. According to one or more embodiments of this aspect, the GTI indication is signaled based at least in part on a buffer status of the wireless device. According to one or more embodiments of this aspect, the GTI signal is transmitted using one of a downlink control information, DCI, and a medium access control, MAC, control element, CE.

According to one or more embodiments of this aspect, the transition is from a connected mode discontinuous reception, C_DRX, state to one of the RRC_Inactive state and RRC_Idle state. According to one or more embodiments of this aspect, the transition is from the RRC_Connected state to the one of RRC_Inactive state and RRC_Idle state. According to one or more embodiments of this aspect, an indication that the wireless device is refraining from transitioning to the RRC_Inactive mode is received based on the wireless device one of having data for transmission and expecting data for transmission within a predetermined time interval.

According to another aspect of the disclosure as specified by the independent claim 1, a method implemented by a wireless device configured to communicate with a network node is provided. Signaling associated with causing the wireless device to transition to or remain in one of a radio resource control, RRC,_Inactive state and RRC_Idle state is received. The wireless device transitions to or remains in one of a radio resource control, RRC,_Inactive state and RRC_Idle state based at least in part on the signaling.

The signaling indicates a configuration configured to cause the wireless device to transition to or remain in one of a radio resource control, RRC,_Inactive state and RRC_Idle state if a predefined criterion is met. The predefined criterion defines a predefined number of connected mode discontinuous reception, C_DRX, cycles during which physical downlink control channel data for the wireless device has not been received, or the predefined criterion defines a predefined number of consecutive wake-up signal, WUS, occasions that have not been detected.

According to one or more embodiments of this aspect, the signaling includes an inactive indication that is configured to cause the wireless device to transition to or remain in one of a radio resource control, RRC,_Inactive state and RRC_Idle state. According to one or more embodiments of this aspect, the inactive indication is a go-to-inactive (GTI) indication included in downlink control information (DCI) or in a MAC CE. According to one or more embodiments of this aspect, the GTI indication is signaled based at least in part on a buffer status of the wireless device.

According to one or more embodiments of this aspect, the GTI signal is transmitted using one of a downlink control information, DCI, and a medium access control, MAC, control element, CE. According to one or more embodiments of this aspect, the transition is from a connected mode discontinuous reception, C_DRX, state to one of the RRC_Inactive state and RRC_Idle state. According to one or more embodiments of this aspect, the transition is from the RRC_Connected state to the one of RRC_Inactive state and RRC_Idle state.

BRIEF DESCRIPTION OF THE DRAWINGS

A more complete understanding of the present embodiments, and the attendant advantages and features thereof, will be more readily understood by reference to the following detailed description when considered in conjunction with the accompanying drawings wherein:

FIG. 1 is a diagram of a radio resource in NR;
FIG. 2 is a diagram of a connected-DRX operation of existing systems;
FIG. 3 is a schematic diagram of an exemplary network architecture illustrating a communication system connected via an intermediate network to a host computer according to the principles in the present disclosure;
FIG. 4 is a block diagram of a host computer communicating via a network node with a wireless device over an at least partially wireless connection according to some embodiments of the present disclosure;
FIG. 5 is a flow chart illustrating exemplary methods implemented in a communication system including a host computer, a network node and a wireless device for executing a client application at a wireless device according to some embodiments of the present disclosure;
FIG. 6 is a flow chart illustrating exemplary methods implemented in a communication system including a host computer, a network node and a wireless device for receiving user data at a wireless device according to some embodiments of the present disclosure;
FIG. 7 is a flow chart illustrating exemplary methods implemented in a communication system including a host computer, a network node and a wireless device for receiving user data from the wireless device at a host computer according to some embodiments of the present disclosure;
FIG. 8 is a flow chart illustrating exemplary methods implemented in a communication system including a host computer, a network node and a wireless device for receiving user data at a host computer according to some embodiments of the present disclosure;
FIG. 9 is a flowchart of an exemplary process in a network node for providing signaling associated with a WD transitioning to or remaining in an RRC_inactive mode/state according to some embodiments of the present disclosure;
FIG. 10 is a flowchart of another exemplary process in a network node according to some embodiments of the present disclosure;
FIG. 11 is a flowchart of another exemplary process in a network node for providing signaling associated with a WD transitioning to or remaining in an RRC_inactive mode/state according to some embodiments of the present disclosure;
FIG. 12 is a flowchart of an exemplary process in a wireless device according to some embodiments of the present disclosure;
FIG. 13 is a diagram of one or more processes described herein such as method 1 and method 3 according to some embodiments of the present disclosure;
FIG. 14 is a flowchart of another exemplary process in a wireless device for receiving signaling associated with a WD transitioning to or remaining in an RRC_inactive mode/state according to some embodiments of the present disclosure;
FIG. 15 is a flowchart of another exemplary process in a network node for providing signaling associated with a WD transitioning to or remaining in an RRC_Inactive mode/state according to some embodiments of the present disclosure; and
FIG. 16 is a flowchart of another exemplary process in a wireless device for receiving signaling associated with a WD transitioning to or remaining in an RRC_Inactive mode/state according to some embodiments of the present disclosure.

DETAILED DESCRIPTION

Frequent PDCCH monitoring occasions in NR drain the wireless device battery significantly. C-DRX configured through RRC is a solution to reduce such occasions, whereby the wireless device wakes up during a small period of ON-duration followed by an Off-duration where the wireless device goes to sleep or to a lower power state. The wireless device wakes up periodically during the On-duration of the C-DRX cycle to monitor the PDCCH. However, in many use cases, it turns out that most of the time there is nothing to be scheduled for the specific wireless device. Energy savings occur during the Off-duration of the C-DRX cycle, where the wireless device is in a sleep state. However, even during the Off-duration of the C-DRX cycle, the power savings achieved are much less compared to if the wireless device was sent or transitioned to the RRC_Inactive state. Further, existing procedures may place the wireless device in an RRC_Inactive state involve numerous communication handshakes, ACKs, etc. than can be a 3-6 stage process taking up milliseconds of time, which equates to a power demand process.

In other words, while C-DRX achieves power savings, it is the RRC-Inactive state in which the wireless device achieves significant power savings, where the wireless device is essentially sleeping and only wakes up in paging cycles to listen to the paging signal. Therefore, if the inactive time of the wireless device is high or lengthy, time wise, it is better to send the wireless device in the RRC_Inactive state/RRC_Idle state rather than to remain in the C-DRX state.

Therefore, it may be advantageous to develop solutions which enable wireless devices to move quickly to the RRC_Inactive state/RRC_Idle state without incurring the overhead of explicit RRC configuration delay and related DL and UL signalinga power-costly activity due to Rx/Tx operations involved including handshakes on various levels.

The instant disclosure advantageously solves at least a portion of at least one problem with existing systems by providing mechanisms for power saving in wireless device by allowing the wireless device to move to the less power consuming RRC_Inactive state and also with less power consuming Rx/Tx activities involved in the transition than currently specified in existing systems/specifications. This helps prevent the wireless device from unnecessarily monitoring the PDCCH even during the C-DRX state, and allows "deeper" sleep states than possible in the C-DRX-off phase, which may provide greater battery savings.

In particular, Method 1 (and 3), described herein, is a very lean mechanism with not much overhead for the network and/or network node. The network and/or network node can just configure this once through RRC.

Although, the network and/or network node overhead in Method 2 may be higher, the network and/or network node has the flexibility in choosing whether to send a Go-To-Inactive (GTI) signal. Such a dynamic approach can help both the NW/network node and wireless device at the same time compared to Method 1, which may mainly benefit the wireless device.

Before describing in detail exemplary embodiments, it is noted that the embodiments reside primarily in combinations of apparatus components and processing steps related to providing signaling associated with a wireless device transitioning to or remaining in an RRC_inactive mode/state or RRC_idle mode/state. Accordingly, components have been represented where appropriate by conventional symbols in the drawings, showing only those specific details that are pertinent to understanding the embodiments so as not to obscure the disclosure with details that will be readily apparent to those of ordinary skill in the art having the benefit of the description herein. Like numbers refer to like elements throughout the description.

As used herein, relational terms, such as "first" and "second," "top" and "bottom," and the like, may be used solely to distinguish one entity or element from another entity or element without necessarily requiring or implying any physical or logical relationship or order between such entities or elements. The terminology used herein is for the purpose of describing particular embodiments only and is not intended to be limiting of the concepts described herein. As used herein, the singular forms "a", "an" and "the" are intended to include the plural forms as well, unless the context clearly indicates otherwise. It will be further understood that the terms "comprises," "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

In embodiments described herein, the joining term, "in communication with" and the like, may be used to indicate electrical or data communication, which may be accomplished by physical contact, induction, electromagnetic radiation, radio signaling, infrared signaling or optical signaling, for example. One having ordinary skill in the art will appreciate that multiple components may interoperate and modifications and variations are possible of achieving the electrical and data communication.

In some embodiments described herein, the term "coupled," "connected," and the like, may be used herein to indicate a connection, although not necessarily directly, and may include wired and/or wireless connections.

The term "network node" used herein can be any kind of network node comprised in a radio network which may further comprise any of base station (BS), radio base station, base transceiver station (BTS), base station controller (BSC), radio network controller (RNC), g Node B (gNB), integrated access backhaul (IAB) node, evolved Node B (eNB or eNodeB), Node B, multi-standard radio (MSR) radio node such as MSR BS, multi-cell/multicast coordination entity (MCE), relay node, donor node controlling relay, radio access point (AP), transmission points, transmission nodes, Remote Radio Unit (RRU) Remote Radio Head (RRH), a core network node (e.g., mobile management entity (MME), self-organizing network (SON) node, a coordinating node, positioning node, MDT node, etc.), an external node (e.g., 3rd party node, a node external to the current network), nodes in distributed antenna system (DAS), a spectrum access system (SAS) node, an element management system (EMS), etc. The network node may also comprise test equipment. The term "radio node" used herein may be used to also denote a wireless device (WD) such as a wireless device (WD) or a radio network node.

In some embodiments, the non-limiting terms wireless device (WD) or a user equipment (UE) are used interchangeably. The WD herein can be any type of wireless device capable of communicating with a network node or another WD over radio signals, such as wireless device (WD). The WD may also be a radio communication device, target device, device to device (D2D) WD, machine type WD or WD capable of machine to machine communication (M2M), low-cost and/or low-complexity WD, a sensor equipped with WD, Tablet, mobile terminals, smart phone, laptop embedded equipped (LEE), laptop mounted equipment (LME), USB dongles, Customer Premises Equipment (CPE), an Internet of Things (IoT) device, or a Narrowband IoT (NB-IOT) device etc.

Also, in some embodiments the generic term "radio network node" is used. It can be any kind of a radio network node which may comprise any of base station, radio base station, base transceiver station, base station controller, network controller, RNC, evolved Node B (eNB), Node B, gNB, Multi-cell/multicast Coordination Entity (MCE), relay node, access point, radio access point, Remote Radio Unit (RRU) Remote Radio Head (RRH).

An indication generally may explicitly and/or implicitly indicate the information it represents and/or indicates. Implicit indication may for example be based on position and/or resource used for transmission. Explicit indication may for example be based on a parametrization with one or more parameters, and/or one or more index or indices, and/or one or more bit patterns representing the information. It may in particular be considered that control signaling as described herein, based on the utilized resource sequence, implicitly indicates the control signaling type.

It may be considered for cellular communication there is provided at least one uplink (LTL) connection and/or channel and/or carrier and at least one downlink (DL) connection and/or channel and/or carrier, e.g., via and/or defining a cell, which may be provided by a network node, in particular a base station, gNB or eNodeB. An uplink direction may refer to a data transfer direction from a terminal to a network node, e.g., base station and/or relay station. A downlink direction may refer to a data transfer direction from a network node, e.g., base station and/or relay node, to a terminal. UL and DL may be associated to different frequency resources, e.g., carriers and/or spectral bands. A cell may comprise at least one uplink carrier and at least one downlink carrier, which may have different frequency bands. A network node, e.g., a base station, gNB or eNodeB, may be adapted to provide and/or define and/or control one or more cells.

Configuring a terminal or wireless device or node may involve instructing and/or causing the wireless device or node to change its configuration, e.g., at least one setting and/or register entry and/or operational mode. A terminal or wireless device or node may be adapted to configure itself, e.g., according to information or data in a memory of the terminal or wireless device. Configuring a node or terminal or wireless device by another device or node or a network may refer to and/or comprise transmitting information and/or data and/or instructions to the wireless device or node by the other device or node or the network, e.g., allocation data (which may also be and/or comprise configuration data) and/or scheduling data and/or scheduling grants. Configuring a terminal may include sending allocation/configuration data to the terminal indicating which modulation and/or encoding to use. A terminal may be configured with and/or for scheduling data and/or to use, e.g., for transmission, scheduled and/or allocated uplink resources, and/or, e.g., for reception, scheduled and/or allocated downlink resources. Uplink resources and/or downlink resources may be scheduled and/or provided with allocation or configuration data.

Generally, configuring may include determining configuration data representing the configuration and providing, e.g. transmitting, it to one or more other nodes (parallel and/or sequentially), which may transmit it further to the radio node (or another node, which may be repeated until it reaches the wireless device). Alternatively, or additionally, configuring a radio node, e.g., by a network node or other device, may include receiving configuration data and/or data pertaining to configuration data, e.g., from another node like a network node, which may be a higher-level node of the network, and/or transmitting received configuration data to the radio node. Accordingly, determining a configuration and transmitting the configuration data to the radio node may be performed by different network nodes or entities, which may be able to communicate via a suitable interface, e.g., an X2 interface in the case of LTE or a corresponding interface for NR. Configuring a terminal (e.g. WD) may comprise scheduling downlink and/or uplink transmissions for the terminal, e.g. downlink data and/or downlink control signaling and/or DCI and/or uplink control or data or communication signaling, in particular acknowledgement signaling, and/or configuring resources and/or a resource pool therefor. In particular, configuring a terminal (e.g. WD) may comprise configuring the WD to perform certain measurements on certain subframes or radio resources and reporting such measurements according to embodiments of the present disclosure.

Signaling may comprise one or more signals and/or symbols. Reference signaling may comprise one or more reference signals and/or symbols. Data signaling may pertain to signals and/or symbols containing data, in particular user data and/or payload data and/or data from a communication layer above the radio and/or physical layer/s. It may be considered that demodulation reference signaling comprises one or more demodulation signals and/or symbols. Demodulation reference signaling may in particular comprise DMRS according to 3GPP and/or LTE and/or NR technologies. Demodulation reference signaling may generally be considered to represent signaling providing reference for a receiving device like a terminal to decode and/or demodulate associated data signaling or data. Demodulation reference signaling may be associated to data or data signaling, in particular to specific data or data signaling. It may be considered that data signaling and demodulation reference signaling are interlaced and/or multiplexed, e.g. arranged in the same time interval covering e.g. a subframe or slot or symbol, and/or in the same time-frequency resource structure like a resource block. A resource element may represent a smallest time-frequency resource, e.g. representing the time and frequency range covered by one symbol or a number of bits represented in a common modulation. A resource element may e.g. cover a symbol time length and a subcarrier, in particular in 3GPP and/or LTE and/or NR standards. A data transmission may represent and/or pertain to transmission of specific data, e.g. a specific block of data and/or transport block.

Data/information may refer to any kind of data, in particular any one of and/or any combination of control data or user data or payload data. Control information (which may also be referred to as control data) may refer to data controlling and/or scheduling and/or pertaining to the process of data transmission and/or the network or terminal operation.

Note that although terminology from one particular wireless system, such as, for example, 3GPP LTE and/or New Radio (NR), may be used in this disclosure, this should not be seen as limiting the scope of the disclosure to only the aforementioned system. Other wireless systems, including without limitation Wide Band Code Division Multiple Access (WCDMA), Worldwide Interoperability for Microwave Access (WiMax), Ultra Mobile Broadband (UMB) and Global System for Mobile Communications (GSM), may also benefit from exploiting the ideas covered within this disclosure.

Note further, that functions described herein as being performed by a wireless device or a network node may be distributed over a plurality of wireless devices and/or network nodes. In other words, it is contemplated that the functions of the network node and wireless device described herein are not limited to performance by a single physical device and, in fact, can be distributed among several physical devices.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

Embodiments described herein provide signaling associated with a WD 22 transitioning to or remaining in an RRC_inactive mode/state or RRC_idle mode/state, thereby providing greater power savings than other methods such as C-DRX. In one or more embodiments, the WD 22 transitions to and remains in the RRC_inactive mode/state or RRC_idle mode/state.

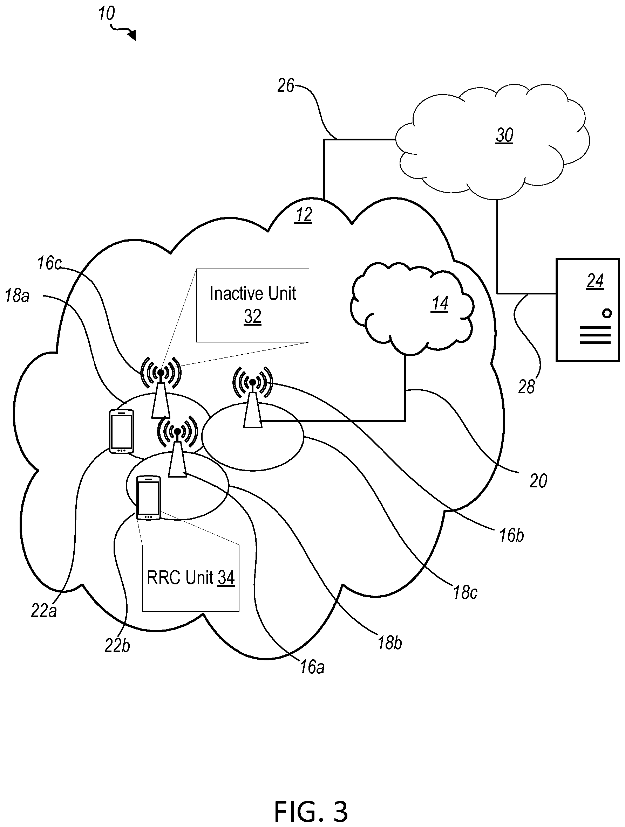

Referring again to the drawing figures, in which like elements are referred to by like reference numerals, there is shown in FIG. 3 a schematic diagram of a communication system 10, according to an embodiment, such as a 3GPP-type cellular network that may support standards such as LTE and/or NR (5G), which comprises an access network 12, such as a radio access network, and a core network 14. The access network 12 comprises a plurality of network nodes 16a, 16b, 16c (referred to collectively as network nodes 16), such as NBs, eNBs, gNBs or other types of wireless access points, each defining a corresponding coverage area 18a, 18b, 18c (referred to collectively as coverage areas 18). Each network node 16a, 16b, 16c is connectable to the core network 14 over a wired or wireless connection 20. A first wireless device (WD) 22a located in coverage area 18a is configured to wirelessly connect to, or be paged by, the corresponding network node 16c. A second WD 22b in coverage area 18b is wirelessly connectable to the corresponding network node 16a. While a plurality of WDs 22a, 22b (collectively referred to as wireless devices 22) are illustrated in this example, the disclosed embodiments are equally applicable to a situation where a sole WD is in the coverage area or where a sole WD is connecting to the corresponding network node 16. Note that although only two WDs 22 and three network nodes 16 are shown for convenience, the communication system may include many more WDs 22 and network nodes 16.

Also, it is contemplated that a WD 22 can be in simultaneous communication and/or configured to separately communicate with more than one network node 16 and more than one type of network node 16. For example, a WD 22 can have dual connectivity with a network node 16 that supports LTE and the same or a different network node 16 that supports NR. As an example, WD 22 can be in communication with an eNB for LTE/E-UTRAN and a gNB for NR/NG-RAN.

The communication system 10 may itself be connected to a host computer 24, which may be embodied in the hardware and/or software of a standalone server, a cloud-implemented server, a distributed server or as processing resources in a server farm. The host computer 24 may be under the ownership or control of a service provider, or may be operated by the service provider or on behalf of the service provider. The connections 26, 28 between the communication system 10 and the host computer 24 may extend directly from the core network 14 to the host computer 24 or may extend via an optional intermediate network 30. The intermediate network 30 may be one of, or a combination of more than one of, a public, private or hosted network. The intermediate network 30, if any, may be a backbone network or the Internet. In some embodiments, the intermediate network 30 may comprise two or more sub-networks (not shown).

The communication system of FIG. 3 as a whole enables connectivity between one of the connected WDs 22a, 22b and the host computer 24. The connectivity may be described as an over-the-top (OTT) connection. The host computer 24 and the connected WDs 22a, 22b are configured to communicate data and/or signaling via the OTT connection, using the access network 12, the core network 14, any intermediate network 30 and possible further infrastructure (not shown) as intermediaries. The OTT connection may be transparent in the sense that at least some of the participating communication devices through which the OTT connection passes are unaware of the routing of uplink and downlink communications. For example, a network node 16 may not or need not be informed about the past routing of an incoming downlink communication with data originating from a host computer 24 to be forwarded (e.g., handed over) to a connected WD 22a. Similarly, the network node 16 need not be aware of the future routing of an outgoing uplink communication originating from the WD 22a towards the host computer 24.

A network node 16 according to an embodiment of the network node aspect is configured to include an inactive unit 32 which is configured to provide signaling associated with a WD 22 transitioning to or remaining in an RRC_inactive mode/state or RRC idle mode/state. In one or more embodiments, the signaling is configured to cause and/or instruct the WD 22 to transition to and remain in the RRC_inactive mode/state or RRC_idle mode/state.

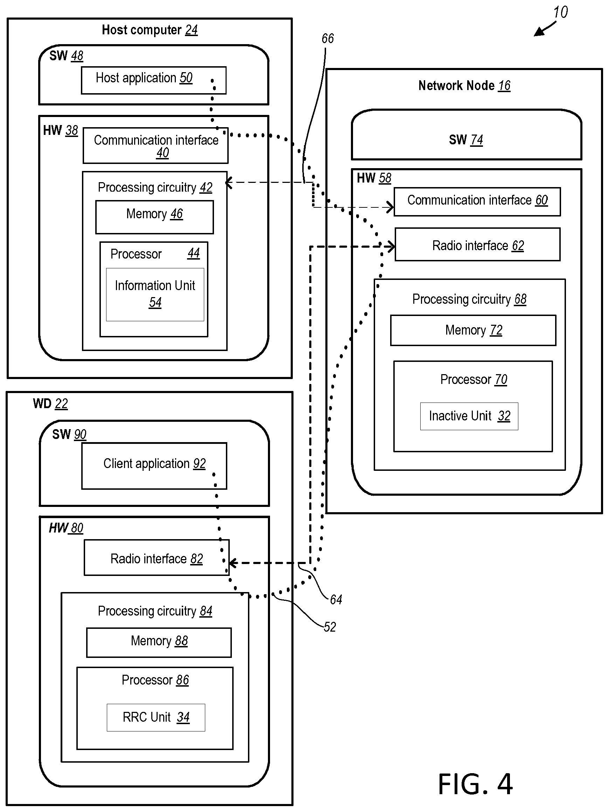

Example implementations, in accordance with an embodiment, of the WD 22, network node 16 and host computer 24 discussed in the preceding paragraphs will now be described with reference to FIG. 4. In a communication system 10, a host computer 24 comprises hardware (HW) 38 including a communication interface 40 configured to set up and maintain a wired or wireless connection with an interface of a different communication device of the communication system 10. The host computer 24 further comprises processing circuitry 42, which may have storage and/or processing capabilities. The processing circuitry 42 may include a processor 44 and memory 46. In particular, in addition to or instead of a processor, such as a central processing unit, and memory, the processing circuitry 42 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 44 may be configured to access (e.g., write to and/or read from) memory 46, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

Processing circuitry 42 may be configured to control any of the methods and/or processes described herein and/or to cause such methods, and/or processes to be performed, e.g., by host computer 24. Processor 44 corresponds to one or more processors 44 for performing host computer 24 functions described herein. The host computer 24 includes memory 46 that is configured to store data, programmatic software code and/or other information described herein. In some embodiments, the software 48 and/or the host application 50 may include instructions that, when executed by the processor 44 and/or processing circuitry 42, causes the processor 44 and/or processing circuitry 42 to perform the processes described herein with respect to host computer 24. The instructions may be software associated with the host computer 24.

The software 48 may be executable by the processing circuitry 42. The software 48 includes a host application 50. The host application 50 may be operable to provide a service to a remote user, such as a WD 22 connecting via an OTT connection 52 terminating at the WD 22 and the host computer 24. In providing the service to the remote user, the host application 50 may provide user data which is transmitted using the OTT connection 52. The "user data" may be data and information described herein as implementing the described functionality. In one embodiment, the host computer 24 may be configured for providing control and functionality to a service provider and may be operated by the service provider or on behalf of the service provider. The processing circuitry 42 of the host computer 24 may enable the host computer 24 to observe, monitor, control, transmit to and/or receive from the network node 16 and or the wireless device 22. The processing circuitry 42 of the host computer 24 may include an information unit 54 configured to enable the service provider to provide information related to signaling associated with a WD 22 transitioning to or remaining in an RRC_inactive mode/state.

The communication system 10 further includes a network node 16 provided in a communication system 10 and including hardware 58 enabling it to communicate with the host computer 24 and with the WD 22. The hardware 58 may include a communication interface 60 for setting up and maintaining a wired or wireless connection with an interface of a different communication device of the communication system 10, as well as a radio interface 62 for setting up and maintaining at least a wireless connection 64 with a WD 22 located in a coverage area 18 served by the network node 16. The radio interface 62 may be formed as or may include, for example, one or more RF transmitters, one or more RF receivers, and/or one or more RF transceivers. The communication interface 60 may be configured to facilitate a connection 66 to the host computer 24. The connection 66 may be direct or it may pass through a core network 14 of the communication system 10 and/or through one or more intermediate networks 30 outside the communication system 10.

In the embodiment shown, the hardware 58 of the network node 16 further includes processing circuitry 68. The processing circuitry 68 may include a processor 70 and a memory 72. In particular, in addition to or instead of a processor, such as a central processing unit, and memory, the processing circuitry 68 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 70 may be configured to access (e.g., write to and/or read from) the memory 72, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

Thus, the network node 16 further has software 74 stored internally in, for example, memory 72, or stored in external memory (e.g., database, storage array, network storage device, etc.) accessible by the network node 16 via an external connection. The software 74 may be executable by the processing circuitry 68. The processing circuitry 68 may be configured to control any of the methods and/or processes described herein and/or to cause such methods, and/or processes to be performed, e.g., by the network node 16. Processor 70 corresponds to one or more processors 70 for performing network node 16 functions described herein. The memory 72 is configured to store data, programmatic software code and/or other information described herein. In some embodiments, the software 74 may include instructions that, when executed by the processor 70 and/or processing circuitry 68, causes the processor 70 and/or processing circuitry 68 to perform the processes described herein with respect to network node 16. For example, processing circuitry 68 of the network node 16 may include an inactive unit 32 configured to provide signaling associated with a WD 22 transitioning to or remaining in an RRC_inactive mode/state.

The communication system 10 further includes the WD 22 already referred to. The WD 22 may have hardware 80 that may include a radio interface 82 configured to set up and maintain a wireless connection 64 with a network node 16 serving a coverage area 18 in which the WD 22 is currently located. The radio interface 82 may be formed as or may include, for example, one or more RF transmitters, one or more RF receivers, and/or one or more RF transceivers.

The hardware 80 of the WD 22 further includes processing circuitry 84. The processing circuitry 84 may include a processor 86 and memory 88. In particular, in addition to or instead of a processor, such as a central processing unit, and memory, the processing circuitry 84 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 86 may be configured to access (e.g., write to and/or read from) memory 88, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

Thus, the WD 22 may further comprise software 90, which is stored in, for example, memory 88 at the WD 22, or stored in external memory (e.g., database, storage array, network storage device, etc.) accessible by the WD 22. The software 90 may be executable by the processing circuitry 84. The software 90 may include a client application 92. The client application 92 may be operable to provide a service to a human or non-human user via the WD 22, with the support of the host computer 24. In the host computer 24, an executing host application 50 may communicate with the executing client application 92 via the OTT connection 52 terminating at the WD 22 and the host computer 24. In providing the service to the user, the client application 92 may receive request data from the host application 50 and provide user data in response to the request data. The OTT connection 52 may transfer both the request data and the user data. The client application 92 may interact with the user to generate the user data that it provides.

The processing circuitry 84 may be configured to control any of the methods and/or processes described herein and/or to cause such methods, and/or processes to be performed, e.g., by WD 22. The processor 86 corresponds to one or more processors 86 for performing WD 22 functions described herein. The WD 22 includes memory 88 that is configured to store data, programmatic software code and/or other information described herein. In some embodiments, the software 90 and/or the client application 92 may include instructions that, when executed by the processor 86 and/or processing circuitry 84, causes the processor 86 and/or processing circuitry 84 to perform the processes described herein with respect to WD 22. In an embodiment of the wireless device aspect, the processing circuitry 84 of the wireless device 22 includes an RRC unit 34 configured to transition the WD 22 to an RRC_inactive state or similar state.

In some embodiments, the inner workings of the network node 16, WD 22, and host computer 24 may be as shown in FIG. 4 and independently, the surrounding network topology may be that of FIG. 3.

In FIG. 4, the OTT connection 52 has been drawn abstractly to illustrate the communication between the host computer 24 and the wireless device 22 via the network node 16, without explicit reference to any intermediary devices and the precise routing of messages via these devices. Network infrastructure may determine the routing, which it may be configured to hide from the WD 22 or from the service provider operating the host computer 24, or both. While the OTT connection 52 is active, the network infrastructure may further take decisions by which it dynamically changes the routing (e.g., on the basis of load balancing consideration or reconfiguration of the network).

The wireless connection 64 between the WD 22 and the network node 16 is in accordance with the teachings of the embodiments described throughout this disclosure. One or more of the various embodiments improve the performance of OTT services provided to the WD 22 using the OTT connection 52, in which the wireless connection 64 may form the last segment. More precisely, the teachings of some of these embodiments may improve the data rate, latency, and/or power consumption and thereby provide benefits such as reduced user waiting time, relaxed restriction on file size, better responsiveness, extended battery lifetime, etc.

In some embodiments, a measurement procedure may be provided for the purpose of monitoring data rate, latency and other factors on which the one or more embodiments improve. There may further be an optional network functionality for reconfiguring the OTT connection 52 between the host computer 24 and WD 22, in response to variations in the measurement results. The measurement procedure and/or the network functionality for reconfiguring the OTT connection 52 may be implemented in the software 48 of the host computer 24 or in the software 90 of the WD 22, or both. In embodiments, sensors (not shown) may be deployed in or in association with communication devices through which the OTT connection 52 passes; the sensors may participate in the measurement procedure by supplying values of the monitored quantities exemplified above, or supplying values of other physical quantities from which software 48, 90 may compute or estimate the monitored quantities. The reconfiguring of the OTT connection 52 may include message format, retransmission settings, preferred routing etc.; the reconfiguring need not affect the network node 16, and it may be unknown or imperceptible to the network node 16. Some such procedures and functionalities may be known and practiced in the art. In certain embodiments, measurements may involve proprietary WD signaling facilitating the host computer's 24 measurements of throughput, propagation times, latency and the like. In some embodiments, the measurements may be implemented in that the software 48, 90 causes messages to be transmitted, in particular, empty or 'dummy' messages, using the OTT connection 52 while it monitors propagation times, errors etc.

Thus, in some embodiments, the host computer 24 includes processing circuitry 42 configured to provide user data and a communication interface 40 that is configured to forward the user data to a cellular network for transmission to the WD 22. In some embodiments, the cellular network also includes the network node 16 with a radio interface 62. In some embodiments, the network node 16 is configured to, and/or the network node's 16 processing circuitry 68 is configured to perform the functions and/or methods described herein for preparing/initiating/maintaining/supporting/ending a transmission to the WD 22, and/or preparing/terminating/maintaining/supporting/ending in receipt of a transmission from the WD 22.

In some embodiments, the host computer 24 includes processing circuitry 42 and a communication interface 40 that is configured to a communication interface 40 configured to receive user data originating from a transmission from a WD 22 to a network node 16. In some embodiments, the WD 22 is configured to, and/or comprises a radio interface 82 and/or processing circuitry 84 configured to perform the functions and/or methods described herein for preparing/initiating/maintaining/supporting/ending a transmission to the network node 16, and/or preparing/terminating/maintaining/supporting/ending in receipt of a transmission from the network node 16.

Although FIGS. 3 and 4 show various "units" such as inactive unit 32, and RRC unit 34 as being within a respective processor, it is contemplated that these units may be implemented such that a portion of the unit is stored in a corresponding memory within the processing circuitry. In other words, the units may be implemented in hardware or in a combination of hardware and software within the processing circuitry.

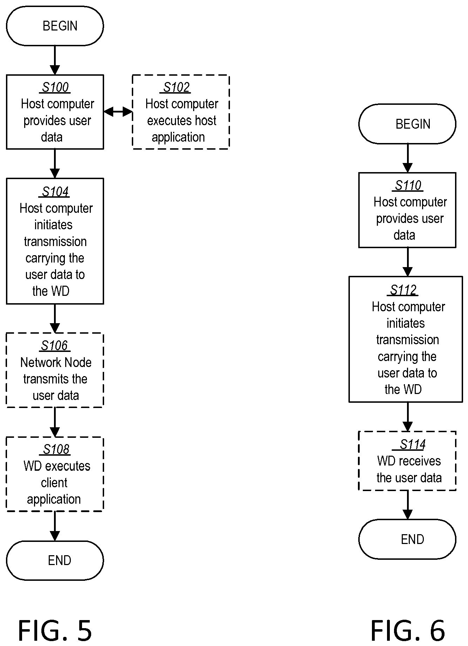

FIG. 5 is a flowchart illustrating an exemplary method implemented in the communication system of FIGS. 3 and 4 in accordance with one embodiment. The communication system may include a host computer 24, a network node 16 and a WD 22, which may be those described with reference to FIG. 4. In a first step of the method, the host computer 24 provides user data (Block S 100). In an optional substep of the first step, the host computer 24 provides the user data by executing a host application, such as, for example, the host application 50 (Block S102). In a second step, the host computer 24 initiates a transmission carrying the user data to the WD 22 (Block S104). In an optional third step, the network node 16 transmits to the WD 22 the user data which was carried in the transmission that the host computer 24 initiated, in accordance with the teachings of the embodiments described throughout this disclosure (Block S106). In an optional fourth step, the WD 22 executes a client application, such as, for example, the client application 92, associated with the host application 50 executed by the host computer 24 (Block S 108).

FIG. 6 is a flowchart illustrating an exemplary method implemented in the communication system of FIG. 3 in accordance with one embodiment. The communication system may include a host computer 24, a network node 16 and a WD 22, which may be those described with reference to FIGS. 3 and 4. In a first step of the method, the host computer 24 provides user data (Block S110). In an optional substep (not shown) the host computer 24 provides the user data by executing a host application, such as, for example, the host application 50. In a second step, the host computer 24 initiates a transmission carrying the user data to the WD 22 (Block S 112). The transmission may pass via the network node 16, in accordance with the teachings of the embodiments described throughout this disclosure. In an optional third step, the WD 22 receives the user data carried in the transmission (Block S 114).

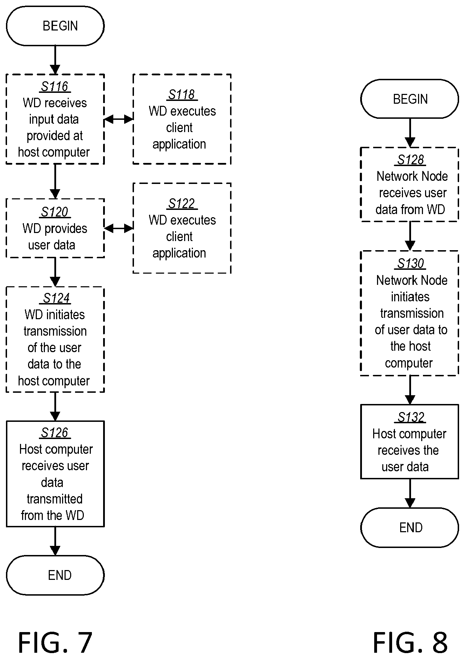

FIG. 7 is a flowchart illustrating an exemplary method implemented in the communication system of FIG. 3 in accordance with one embodiment. The communication system may include a host computer 24, a network node 16 and a WD 22, which may be those described with reference to FIGS. 3 and 4. In an optional first step of the method, the WD 22 receives input data provided by the host computer 24 (Block S 1 16). In an optional substep of the first step, the WD 22 executes the client application 92, which provides the user data in reaction to the received input data provided by the host computer 24 (Block S 118). Additionally or alternatively, in an optional second step, the WD 22 provides user data (Block S 120). In an optional substep of the second step, the WD provides the user data by executing a client application, such as, for example, client application 92 (Block S 122). In providing the user data, the executed client application 92 may further consider user input received from the user. Regardless of the specific manner in which the user data was provided, the WD 22 may initiate, in an optional third substep, transmission of the user data to the host computer 24 (Block S124). In a fourth step of the method, the host computer 24 receives the user data transmitted from the WD 22, in accordance with the teachings of the embodiments described throughout this disclosure (Block S126).

FIG. 8 is a flowchart illustrating an exemplary method implemented in the communication system of FIG. 3 in accordance with one embodiment. The communication system may include a host computer 24, a network node 16 and a WD 22, which may be those described with reference to FIGS. 3 and 4. In an optional first step of the method, in accordance with the teachings of the embodiments described throughout this disclosure, the network node 16 receives user data from the WD 22 (Block S128). In an optional second step, the network node 16 initiates transmission of the received user data to the host computer 24 (Block S130). In a third step, the host computer 24 receives the user data carried in the transmission initiated by the network node 16 (Block S132).

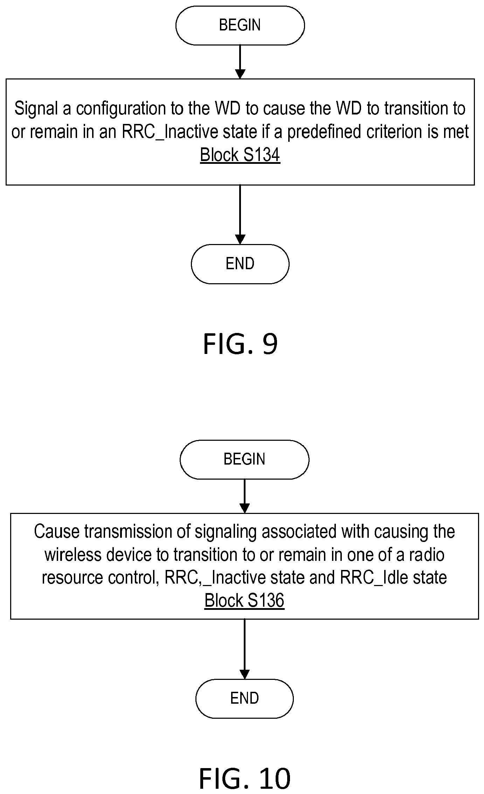

FIG. 9 is a flowchart of an exemplary process in a network node 16 for providing signaling associated with a WD 22 transitioning to or remaining in an RRC_inactive mode/state. One or more Blocks described herein may be performed by one or more elements of network node 16 such as by processing circuitry 68, inactive unit 32 radio interface 62, communication interface 60, etc. Network node 16 is configured to signal (Block S134) a configuration to the WD 22 to cause the WD 22 to transition to or remain in an RRC_Inactive state if a predefined criterion is met.

The predefined criterion defines a predefined number of C_DRX cycles during which physical downlink control channel data for the WD 22 has not been received, or the predefined criterion defines a predefined number of consecutive wake-up signal (WUS) occasion that has not been detected.

FIG. 10 is a flowchart of another exemplary process in network node 16 according to one or more embodiments of the present disclosure. One or more Blocks described herein may be performed by one or more elements of network node 16 such as by processing circuitry 68, inactive unit 32 radio interface 62, communication interface 60, etc. Network node 16 such as via one or more of processing circuitry 68, inactive unit 32, radio interface 62, communication interface 60, etc. is configured to cause (Block S136) transmission of signaling associated with causing the wireless device 22 to transition to or remain in one of a radio resource control, RRC,_Inactive state and RRC_Idle state.

The signaling indicates a configuration that is configured to cause the wireless device 22 to transition to or remain in one of a radio resource control, RRC,_Inactive state and RRC_Idle state if a predefined criterion is met. The predefined criterion defines a predefined number of connected mode discontinuous reception, C DRX, cycles during which physical downlink control channel data for the wireless device 22 has not been received, or the predefined criterion defines a predefined number of consecutive wake-up signal, WUS, occasions that have not been detected.

According to one or more embodiments, the signaling includes an inactive indication that is configured to cause the wireless device 22 to transition to or remain in one of a radio resource control, RRC,_Inactive state and RRC_Idle state. According to one or more embodiments, the inactive indication is a go-to-inactive (GTI) indication included in downlink control information (DCI) or in a MAC CE. According to one or more embodiments, the GTI indication is signaled based at least in part on a buffer status of the wireless device 22.

According to one or more embodiments, the GTI signal is transmitted using one of a downlink control information, DCI, and a medium access control, MAC, control element, CE. According to one or more embodiments, the transition is from a connected mode discontinuous reception, C_DRX, state to one of the RRC_Inactive state and RRC_Idle state. According to one or more embodiments, the transition is from the RRC_Connected state to the one of RRC_Inactive state and RRC_Idle state. According to one or more embodiments, the processing circuitry 68 is further configured to receive an indication that the wireless device 22 is refraining from transitioning to the RRC_Inactive mode based on the wireless device 22 one of having data for transmission and expecting data for transmission within a predetermined time interval.

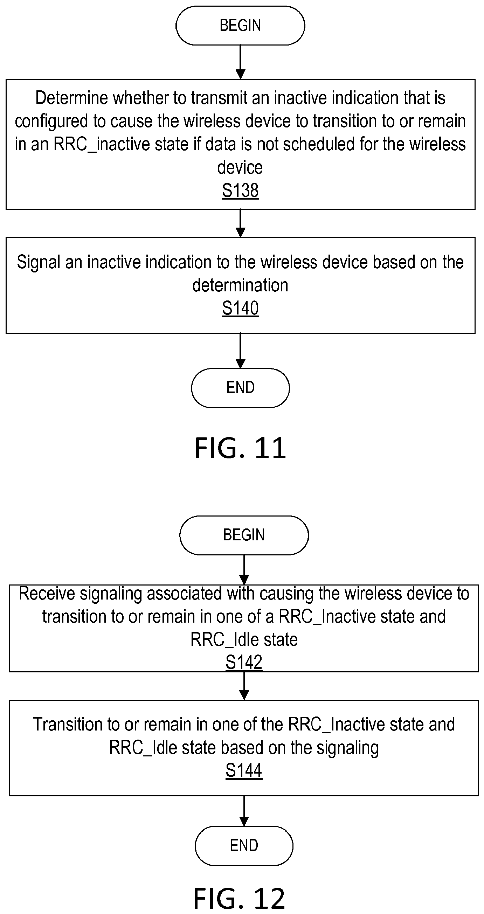

FIG. 11 is a flowchart of another exemplary process in a network node 16 for providing signaling associated with a WD 22 transitioning to or remaining in an RRC_inactive mode/state. One or more Blocks described herein may be performed by one or more elements of the network node 16 such as by processing circuitry 68, inactive unit 32 radio interface 62, the communication interface 60, etc. Network node 16 such as via one or more of processing circuitry 68, inactive unit 32, radio interface 62, communication interface 60, etc. is configured to determine (Block S138) whether to transmit an inactive indication that is configured to cause the wireless device 22 to transition to or remain in an RRC_inactive state if data is not scheduled for the wireless device 22. Network node 16 such as via one or more of processing circuitry 68, inactive unit 32, radio interface 62, communication interface 60, etc. is configured to signal (Block S 140) an inactive indication to the wireless device 22 based on the determination.

In one or more embodiments, the inactive indication is a go-to-inactive (GTI) indication included in downlink control information (DCI) or in a MAC CE. In one or more embodiments, the determination is based on the buffer status of the wireless device 22.

FIG. 12 is a flowchart of an exemplary process of RRC unit 34 in a wireless device 22 according to some embodiments of the present disclosure. One or more Blocks described herein may be performed by one or more elements of WD 22 such as by processing circuitry 84, radio interface 82, RRC unit 34, etc. WD 22 such as via one or more of processing circuitry 84, radio interface 82, RRC unit 34, etc. is configured to receive (Block S142) signaling associated with causing the wireless device to transition to or remain in one of an RRC_Inactive state and RRC_Idle state. WD 22 such as via one or more of processing circuitry 84, radio interface 82, RRC unit 34, etc. is configured to transition to or remain in (Block S144) one of the RRC_Inactive state and RRC_Idle state based on the signaling.

The signaling is a configuration that is configured to cause the WD 22 to transition to or remain in one of an RRC_Inactive state and RRC_Idle state if a predefined criterion is met. Alternatively or in addition, the signaling is an inactive indication that is configured to cause the wireless device 22 to transition to or remain in one of an RRC_inactive state and RRC_Idle state if data is not scheduled for the wireless device 22. In one or more embodiments, the inactive indication is a go-to-inactive (GTI) indication included in downlink control information (DCI) or in a MAC CE.

The predefined criterion defines a predefined number of connected mode discontinuous reception, C_DRX, cycles during which physical downlink control channel data for the wireless device 22 has not been received, or the predefined criterion defines a predefined number of consecutive wake-up signal, WUS, occasions that have not been detected. According to one or more embodiments, the signaling includes an inactive indication that is configured to cause the wireless device 22 to transition to or remain in one of a radio resource control, RRC,_Inactive state and RRC_Idle state.

According to one or more embodiments, the GTI indication is signaled based at least in part on a buffer status of the wireless device 22. According to one or more embodiments, the GTI signal is transmitted using one of a downlink control information, DCI, and a medium access control, MAC, control element, CE. According to one or more embodiments, the transition is from a connected mode discontinuous reception, C_DRX, state to one of the RRC_Inactive state and RRC_Idle state. According to one or more embodiments, the transition is from the RRC_Connected state to the one of RRC_Inactive state and RRC_Idle state.

Having generally described arrangements for providing signaling associated with a WD 22 transitioning to or remaining in an RRC_inactive mode/state, details for these arrangements, functions and processes are provided as follows, and which may be implemented by the network node 16, wireless device 22 and/or host computer 24.

Embodiments provide signaling associated with a WD 22 transitioning to or remaining in an RRC_inactive mode/state or an RRC_idle mode/state, thereby providing greater power savings than other methods such as C-DRX.

Methods 1 and 3:

RRC Configuration:

In these methods, the network/network node 16 such as via one or more of processing circuitry 84, radio interface 82, RRC unit 34, etc. configures the WD 22 such as via signaling in advance by, for example, either broadcast as part of system information or through dedicated WD 22 configuration, for example, in Method 1, to move to the RRC_Inactive state after N consecutive DRX cycles. In one or more embodiments, network node 16 such as via one or more of processing circuitry 68, inactive unit 32, radio interface 62, communication interface 60, etc. preconfigures WD 22 to transition to RRC_Inactive state based on a predetermined criterion such as after N consecutive DRX cycles. Once configured, the WD 22 has/uses a timer running that to keep track of the number of past contiguous C-DRX cycles. Once the count crosses the value of N, the WD 22 such as via one or more of processing circuitry 84, RRC unit 34, radio interface 82, etc. switches to the low-powered RRC-Inactive state. The same principle applies to Method 3 as well, where if no WUS is detected over M consecutive WUS occasions (e.g., predefined criterion), the WD 22 such as via one or more of processing circuitry 84, RRC unit 34, radio interface 82, etc. moves to the RRC_Inactive state.

WUS design:

The WUS can be a DCI-based or other signal that may not schedule PDSCH data or carry conventional DL signaling (e.g., DL HARQ or UL grant). The CRC may be scrambled with the C-RNTI of the targeted WD 22 or a WUG-RNTI (wake-up group) where the WD 22 has been configured.

In some embodiments, the DCI may carry dummy data and the WD 22 receives such as via one or more of the radio interface 82, processing circuitry 84, etc. the wake-up message by virtue of a successful CRC check using the WD 22's C-RNTI or a WU-group-RNTI. In other embodiments, when group-WU is employed, the DCI may additionally contain C-RNTI(s) of the targeted WDs 22 in the group.

In some embodiments, the WU-DCI may, however, also carry additional information to the targeted WD 22 or WD 22 group. The wake-up DCI may use, for example, the DCI format 1-0, with some fields optionally redefined or reallocated to WU-specific information.

In Method 1, WUS is used to override the RRC configuration so the WD 22 such as via one or more of processing circuitry 84, radio interface 82, RRC unit 34, etc. stays in RRC_CONNECTED. While in Method 3, the application of WUS is to let the WD 22 know that a scheduling PDCCH is present.

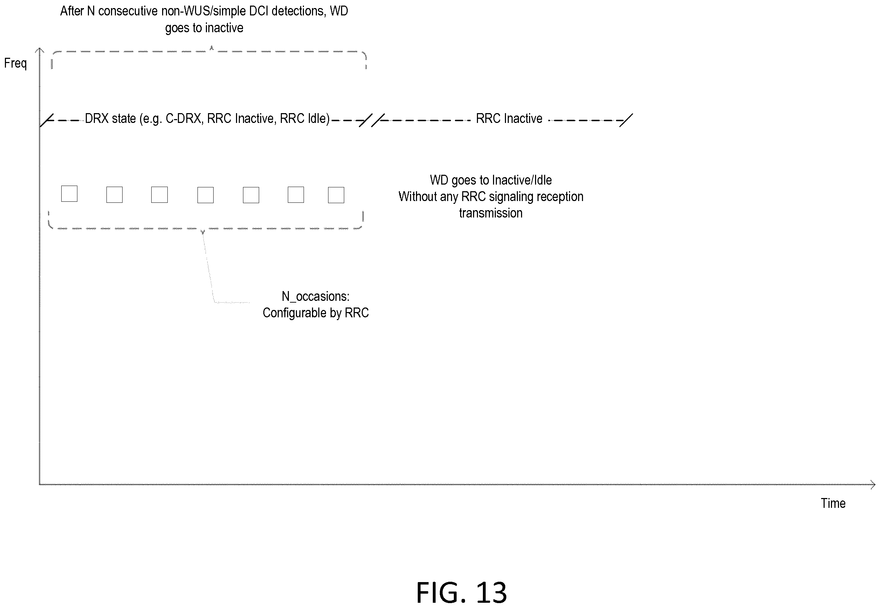

FIG. 13 is a diagram illustrating an example of Methods 1 and 3. In particular, in one or more embodiments, the WD 22 may transition to and remain in inactive/idle (i.e., RRC_Inactive or _Idle) as illustrated in FIG. 13.

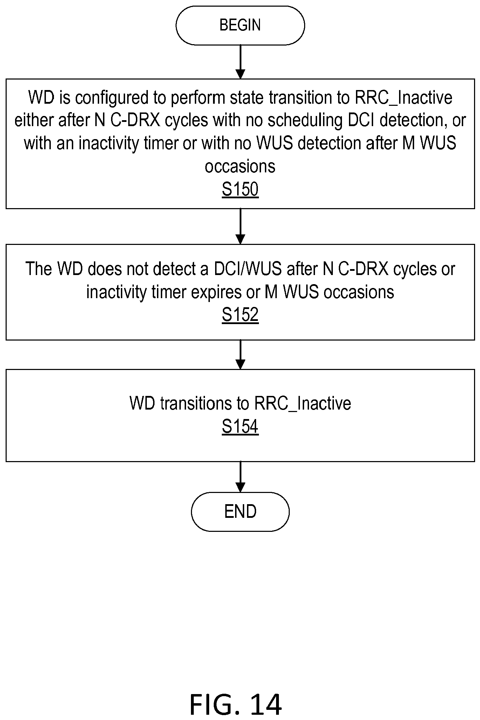

FIG. 14 is a flow diagram of another exemplary process in accordance with the principles of the disclosure. One or more Blocks described herein may be performed by one or more elements of WD 22 such as processing circuitry 84, RRC unit 34, radio interface 82, etc. WD such as via one or more of processing circuitry 84, RRC unit 34, radio interface 82, etc. is configured to receive (Block S150) a configuration to perform state transition to RRC_Inactive either after N C-DRX cycles with no scheduling DCI detection, or with an inactivity timer or with no WUS detection after M WUS occasions. In one or more embodiments, one or more of the N C-DRX cycles with no scheduling DCI detection, or with an inactivity timer or with no WUS detection after M WUS occasions are part of criteria or criterion for initiating transition of WD 22 to RRC_Inactive. WD 22 such as via one or more of processing circuitry 84, radio interface 82, RRC unit 34, etc. is configured to not detect (Block S 152) a DCI/WUS after N C-DRX cycles or inactivity timer expires or M WUS occasions. For example, WD 22 such as via one or more of processing circuitry 84, RRC unit 34, radio interface 82, etc. determines a criterion or criteria as described above is met, i.e., WD 22 determines one of the following: a DCI/WUS after N C-DRX cycles has not been detected or inactivity timer expires or M WUS occasions have not been detected. WD 22 such as via one or more of processing circuitry 84, radio interface 82, RRC unit 34, etc. is configured to transition/logically move (Block S154) to RRC_Inactive state.

In Block S 150, the WD 22 such as via one or more of processing circuitry 84, radio interface 82, RRC unit 34, etc. is configured by the network/network node 16 in order to move to RRC_Inactive state from RRC_CONNECTED (or remain in RRC_Inactive as explained below) after, e.g., a period of N C-DRX cycles of inactivity. This is determined as WD 22 monitors PDCCH during the ON duration of the C-DRX, and if no DCI is detected, the WD 22 such as via one or more of processing circuitry 84, radio interface 82, RRC unit 34, etc. can determine that the WD 22 is in an inactive cycle and therefore transition to RRC_Inactive. The configuration of transition conditions (i.e., predefined criterion or criteria) and, e.g., values for N or M may be performed using RRC signaling. (The setting may be reconfigured is deemed desirable by the network/network node 16, also via RRC or e.g. via DCI- or MAC CE-based signaling.)

Block S 152 describes the situation that the WD 22 has not detected any DCI over a period of N C-DRX cycles and further, it has not detected a WUS from the network/network node 16 to stay awake. This WUS does not need to be necessary WD 22 specific, and can also be defined for a group of WDs 22.

If the WUS is a DCI, the WUS has its own search space (different from the scheduling DCI) which the WD 22 knows of so the WD 22 can know when it needs to check for to determine if the WUS is present or detected. If the WUS is transmitted in a duty-cycled manner as previously discussed, the WD 22 knows how many WUS on-cycles have passed without detecting a WUS.

In Block S154, the WD 22 such as via one or more of processing circuitry 84, radio interface 82, RRC unit 34, etc. moves to RRC_Inactive if the outcome of Block S152 turned out to be positive.

In another embodiment of Method 1, the WD 22 may be already in RRC_Inactive or RRC_IDLE states. In this case, the same procedure can be readily applied and if the WD 22 is not paged over a specific period of time, then the WD 22 can stay in RRC_Inactive or RRC_IDLE states.

Method 2:

In this method, the network/network node 16 such as via one or more of processing circuitry 68, radio interface 62, inactive unit 32, etc. can send the WD 22 to RRC_Inactive state via a GTI-DCI if it is determined that nothing is scheduled for the WD 22 and the buffer status of the WD 22 is also empty (e.g., WD 22 has not LTL data buffered for UL transmission to network node 16).

GTI-DCI design:

In one embodiment, the network/network node 16 such as via one or more of processing circuitry 68, inactive unit 32, radio interface 62, etc. can use the DCI 1-0 format to send the GTI signal to the WD 22. The WD 22 such as via one or more of processing circuitry 84, radio interface 82, RRC unit 34, etc. can then detect this and go to RRC_Inactive. In a way, the GTI-DCI can use similar design principles as wake-up-DCI with the difference that in this case, receiving this message indicates the WD 22 to move to RRC_Inactive. Again, in the same way, it can also be configured either as a WD 22 specific or a group of WDs 22.

In one embodiment, the network can also send the I-RNTI which is necessary in the RRC_Inactive mode to the WD 22 within the GTI-DCI. Otherwise, it can be configured beforehand, e.g., via RRC, together with GTI configuration.

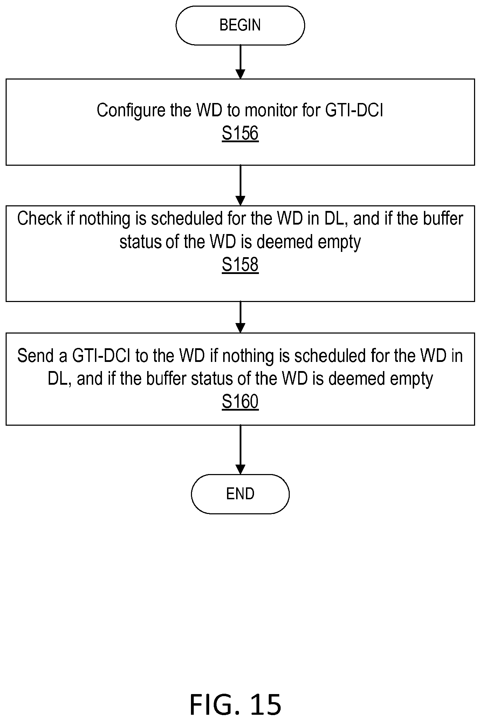

FIG. 15 is a flow diagram of another exemplary process of network node 16 in accordance with the principles of the disclosure. One or more Blocks described herein may be performed by one or more elements of the network node 16 such as processing circuitry 68, inactive unit 32, radio interface 62, etc. Network node 16 such as via one or more of processing circuitry 68, inactive unit 32, radio interface 62, etc. is configured to configure (Block S156) WD 22 to monitor for GTI-DCI. Network node 16 such as via one or more of processing circuitry 68, inactive unit 32, radio interface 62, etc. is configured to check (Block S158) if any data is scheduled for the WD 22 in the downlink, and if the buffer status of the WD 22 is deemed empty. The network node 16 such as via one or more of processing circuitry 68, inactive unit 32, radio interface 62, etc. is configured to optionally send (Block S160) GTI-DCI to the WD 22 if the determination or check of Block S158 indicating data is not scheduled for the WD 22 in the downlink and/or the buffer status of the WD 22 indicates the buffer of WD 22 is empty.

In Block S156, the network/network node 16 such as via one or more of processing circuitry 68, inactive unit 32, radio interface 62, etc. may need to configure the WD 22 such that it is aware that the WD 22 should monitor the GTI-DCI.

In Block S158, the network/network node 16 such as via one or more of processing circuitry 68, inactive unit 32, radio interface 62, etc. determines that no DL is scheduled for the WD 22 and further, the WD 22 buffer status is also empty, therefore the WD 22 is not currently planning LTL transmission.

If the outcome of Block S160 turned out to be positive or if the determinations of Block 100 where made, then the network/network node 16 such as via one or more of processing circuitry 68, inactive unit 32, radio interface 62, etc. can optionally choose to send the WD 22 to RRC_Inactive through the use of GTI-DCI.

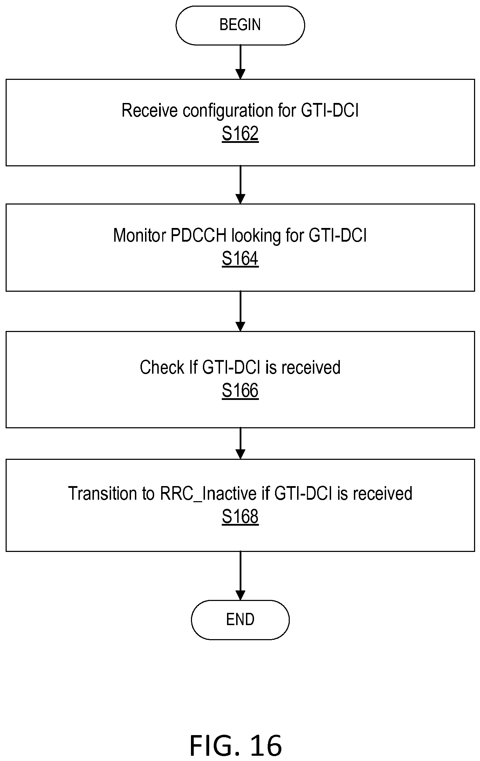

FIG. 16 is a flow diagram of another exemplary process in accordance with the principles of the disclosure. Matching steps with the network node 16 flow may be indicated in bold such as S162 and S164; details in those Blocks provided in the network node 16 descriptions also apply to the WD 22 flow but with respect to RRC unit 34. WD 22 such as via one or more of processing circuitry 84, RRC unit 34, radio interface 82, etc. is configured to receive (Block S162) a configuration for GTI-DCI. WD 22 such as via one or more of processing circuitry 84, RRC unit 34, radio interface 82, etc. is configured to monitor (Block S164) PDCCH for GTI-DCI. WD 22 such as via one or more of processing circuitry 84, RRC unit 34, radio interface 82, etc. is configured to check/determine (Block S166) if GTI-DCI is received or detected. WD 22 such as via one or more of processing circuitry 84, RRC unit 34, radio interface 82, etc. is configured to transition (Block S 168) to RRC_Inactive if GTI-DCI is received.

In Block S 162, the WD 22 such as via one or more of processing circuitry 84, RRC unit 34, radio interface 82, etc. receives the corresponding configurations related to GTI-DCI from the NW, and becomes aware that the WD 22 such as via one or more of processing circuitry 84, RRC unit 34, radio interface 82, etc. may monitor this DCI in the PDCCH monitoring occasions.

In Block S 164, the WD 22 such as via one or more of processing circuitry 84, RRC unit 34, radio interface 82, etc. monitors the PDCCH and look for GTI-DCI particularly. If as in Block S166, the GTI-DCI is received, then in Step S168, the WD 22 such as via one or more of processing circuitry 84, RRC unit 34, radio interface 82, etc. moves to RRC_Inactive.

Additional aspects

If the WD 22 has some UL data left to transmit on the PUSCH then it may be undesirable to move to the RRC-Inactive state.

In some embodiments, the network/network node 16 such as via one or more of processing circuitry 68, inactive unit 32, radio interface 62, etc. considers the PUSCH buffer status of the WD 22 before sending WD 22 to the inactive state (according to method 2), using the BSR by the WD 22 provided to the network/network node 16. Using the buffer report of the WD 22, the network/network node 16 such as via one or more of processing circuitry 68, inactive unit 32, radio interface 62, etc. may make an informed decision whether to send the WD 22 directly to the Inactive-state. In one embodiment, the network/network node 16 such as via one or more of processing circuitry 68, inactive unit 32, radio interface 62, etc. signals to the WD 22 to transition to RRC_Inactive.

In other embodiments (e.g., according to method 1 and 3), the WD 22 itself may consider its PUSCH buffer status and refrain from transitioning to RRC_Inactive if there remains data to transmit, or, e.g., if its app status indicates that LTL or DL data transmission is expected within a predetermined time interval. For example, the WD 22 may refrain (i.e., cancel or suspend) the transition described herein based at least in part on the buffer status and/or if data is expected within a predefined/predetermined time.

In such case, the WD 22 such as via one or more of processing circuitry 84, radio interface 82, RRC unit 34, etc. could inform the network/network node 16, e.g., on the PUCCH that it needs to stay/remain in RRC_connected. The network/network node 16 such as via one or more of processing circuitry 68, inactive unit 32, radio interface 62, etc. could then optionally request buffer status report from the WD 22 for further decision making. In other, embodiment, the WD 22 such as via one or more of processing circuitry 84, RRC unit 34, radio interface 82, etc. may signal to the network/network node 16 prior to transition that the WD 22 may be transitioning to RRC-Inactive, e.g., via a UCI. This avoids misalignment in state bookkeeping between the NW/network node 16 and the WD 22. In one or more embodiments, WD 22 such as via one or more of processing circuitry 84, radio interface 82, RRC unit 34, etc. may request that the network node 16 sends WD 22 to inactive.

As used herein, RRC_Inactive denotes the low-power state where the WD 22 can operate with lower power consumption compared to RRC_Connected, including C-DRX. Instead of RRC-Inactive, in some cases, the WD 22 may be transferred to RRC_Idle.

In one or more embodiments, the WD 22 such as via one or more of processing circuitry 84, radio interface 82, RRC unit 34, etc. is configured with an I-RNTI. When sending the WD 22 to RRC Inactive, the I-RNTI of the WD 22 22 such as via one or more of processing circuitry 84, radio interface 82, RRC unit 34, etc. may need to be sent to WD 22. However, the methods mentioned here may rely on signaling through DCI. Therefore, it may be necessary to provide the WD 22 with the I-RNTI beforehand (particularly in case of Methods 1 and 3) or send at the same time as GTI-DCI, possibly within that DCI.

Further, one or more embodiments described herein, the network node 16 may first attempt to transition the WD 22 to an RRC_Inactive state first since waking up from the RRC_Inactive state may require the WD 22 to uses a lower number of states to wake up than if in an RRC_Idle state such that wake up of WD 22 is faster. RRC_Idle state may be used as a second option to RRC_Inactive state for at least this reason. In one or more other embodiments, transitioning to RRC_Idle state may be preferred over RRC_Inactive state such as if the device is a metered device that may wake up after long periods of sleep, e.g., wakes up once a week. In this case, transitioning to RRC_Inactive is a backup option.

As will be appreciated by one of skill in the art, the concepts described herein may be embodied as a method, data processing system, computer program product and/or computer storage media storing an executable computer program. Accordingly, the concepts described herein may take the form of an entirely hardware embodiment, an entirely software embodiment or an embodiment combining software and hardware aspects all generally referred to herein as a "circuit" or "module." Any process, step, action and/or functionality described herein may be performed by, and/or associated to, a corresponding module, which may be implemented in software and/or firmware and/or hardware. Furthermore, the disclosure may take the form of a computer program product on a tangible computer usable storage medium having computer program code embodied in the medium that can be executed by a computer. Any suitable tangible computer readable medium may be utilized including hard disks, CD-ROMs, electronic storage devices, optical storage devices, or magnetic storage devices.

Some embodiments are described herein with reference to flowchart illustrations and/or block diagrams of methods, systems and computer program products. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer (to thereby create a special purpose computer), special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable memory or storage medium that can direct a computer or other programmable data processing apparatus to function in a particular manner, such that the instructions stored in the computer readable memory produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks.

It is to be understood that the functions/acts noted in the blocks may occur out of the order noted in the operational illustrations. For example, two blocks shown in succession may in fact be executed substantially concurrently or the blocks may sometimes be executed in the reverse order, depending upon the functionality/acts involved. Although some of the diagrams include arrows on communication paths to show a primary direction of communication, it is to be understood that communication may occur in the opposite direction to the depicted arrows.

Computer program code for carrying out operations of the concepts described herein may be written in an object oriented programming language such as Java® or C++. However, the computer program code for carrying out operations of the disclosure may also be written in conventional procedural programming languages, such as the "C" programming language. The program code may execute entirely on the user's computer, partly on the user's computer, as a stand-alone software package, partly on the user's computer and partly on a remote computer or entirely on the remote computer. In the latter scenario, the remote computer may be connected to the user's computer through a local area network (LAN) or a wide area network (WAN), or the connection may be made to an external computer (for example, through the Internet using an Internet Service Provider).

Many different embodiments have been disclosed herein, in connection with the above description and the drawings. It will be understood that it would be unduly repetitious and obfuscating to literally describe and illustrate every combination and subcombination of these embodiments. Accordingly, all embodiments can be combined in any way and/or combination, and the present specification, including the drawings, shall be construed to constitute a complete written description of all combinations and subcombinations of the embodiments described herein, and of the manner and process of making and using them, and shall support claims to any such combination or subcombination.

Abbreviations that may be used in the preceding description include:

| Abbreviation | Explanation |
| --- | --- |
| 3GPP | 3rd Generation Partnership Project |
| 5G | 5th Generation |
| BB | Baseband |
| BW | Bandwidth |
| C-DRX/CDRX | Connected mode DRX (i.e. DRX in RRC_CONNECTED state) |
| CRC | Cyclic Redundancy Check |
| DCI | Downlink Control Information |
| DL | Downlink |
| DRX | Discontinuous Reception |
| gNB | A radio base station in 5G/NR. |
| HARQ | Hybrid Automatic Repeat Request |
| IoT | Internet of Things |
| LO | Local Oscillator |
| LTE | Long Term Evolution |
| MAC | Medium Access Control |
| MCS | Modulation and Coding Scheme |
| mMTC | massive MTC (referring to scenarios with ubiquitously deployed MTC devices) |
| ms | millisecond |
| MTC | Machine Type Communication |
| NB | Narrowband |
| NB-IoT | Narrowband Internet of Things |
| NR | New Radio |
| NW | Network |
| PDCCH | Physical Downlink Control Channel |
| PDSCH | Physical Downlink Shared Channel |
| RF | Radio Frequency |
| RNTI | Radio Network Temporary Identifier |
| RRC | Radio Resource Control |
| RX | Receiver/Reception |
| SSB | Synchronization Signal Block |
| T/F | Time/Frequency |
| TX | Transmitter/Transmission |
| UE | User Equipment |
| UL | Uplink |
| WU | Wake-up |
| WUG | Wake-up Group |
| WUR | Wake-up Radio / Wake-up Receiver |
| WUS | Wake-up Signal / Wake-up Signaling |

It will be appreciated by persons skilled in the art that the embodiments described herein are not limited to what has been particularly shown and described herein above. In addition, unless mention was made above to the contrary, it should be noted that all of the accompanying drawings are not to scale. The scope of the invention is defined by the following claims.

**Claims**

1. A method implemented by a wireless device (22) configured to communicate with a network node (16), method comprising:

   receiving (S142) signaling associated with causing the wireless device (22) to transition to or remain in one of a radio resource control, RRC,_Inactive state and RRC_Idle state; and transitioning to or remain in (S144) one of a radio resource control, RRC,_Inactive state and RRC_Idle state based at least in part on the signaling;
   wherein the signaling indicates a configuration configured to cause the wireless device (22) to transition to or remain in one of a radio resource control, RRC,_Inactive state and RRC_Idle state if a predefined criterion is met; and
   wherein the predefined criterion defines a predefined number of consecutive wake-up signal, WUS, occasions that have not been detected, or wherein the predefined criterion defines a predefined number of connected mode discontinuous reception, C_DRX, cycles during which physical downlink control channel data for the wireless device (22) has not been received.

2. The method of Claim 1, wherein the signaling includes an inactive indication that is configured to cause the wireless device (22) to transition to or remain in one of a radio resource control, RRC, _Inactive state and RRC_Idle state.

3. The method of Claim 2, wherein the inactive indication is a go-to-inactive, GTI, indication included in downlink control information, DCI, or in a MAC CE.

4. The method of Claim 3, wherein the GTI indication is signaled based at least in part on a buffer status of the wireless device (22).

5. The method of any one of Claims 1 to 4, wherein the transition is from a connected mode discontinuous reception, C_DRX, state to one of the RRC_Inactive state and RRC_Idle state.

6. The method of any one of Claims 1 to 5, wherein the transition is from a RRC_Connected state to the one of RRC_Inactive state and RRC_Idle state.

**7.** A method implemented by a network node (16) configured to communicate with a wireless device (22), the method comprising:

causing (S136) transmission of signaling associated with causing the wireless device (22) to transition to or remain in one of a radio resource control,
RRC,_Inactive state and RRC_Idle state;
wherein the signaling indicates a configuration that is configured to cause the wireless device (22) to transition to or remain in one of a radio resource control, RRC,_Inactive state and RRC_Idle state if a predefined criterion is met; and
wherein the predefined criterion defines a predefined number of consecutive wake-up signal, WUS, occasions that have not been detected, or wherein the predefined criterion defines a predefined number of connected mode discontinuous reception, C_DRX, cycles during which physical downlink control channel data for the wireless device (22) has not been received.

**8.** The method of Claim 7, further comprising receiving an indication that the wireless device (22) is refraining from transitioning to the RRC_Inactive mode based on the wireless device (22) one of having data for transmission and expecting data for transmission within a predetermined time interval.

**9.** The method of Claim 7 or 8, further comprising any feature or step of any one of claims 2 to 6, or any feature or step corresponding thereto.

**10.** A wireless device (22) configured to communicate with a network node (16), the wireless device (22) comprising processing circuitry (68) configured to:

receive signaling associated with causing the wireless device (22) to transition to or remain in one of a radio resource control, RRC,_Inactive state and RRC_Idle state; and
transition to or remain in one of a radio resource control, RRC,_Inactive state and RRC_Idle state based at least in part on the signaling;
wherein the signaling indicates a configuration configured to cause the wireless device (22) to transition to or remain in one of a radio resource control, RRC,_Inactive state and RRC_Idle state if a predefined criterion is met; and
wherein the predefined criterion defines a predefined number of consecutive wake-up signal, WUS, occasions that have not been detected, or wherein the predefined criterion defines a predefined number of connected mode discontinuous reception, C_DRX, cycles during which physical downlink control channel data for the wireless device (22) has not been received.

**11.** The wireless device (22) of Claim 10, further configured to perform the steps of any one of claims 2 to 6.

**12.** A network node (16) configured to communicate with a wireless device (22), the network node (16) comprising processing circuitry (68) configured to:

cause transmission of signaling associated with causing the wireless device (22) to transition to or remain in one of a radio resource control, RRC,_Inactive state and RRC_Idle state;
wherein the signaling indicates a configuration that is configured to cause the wireless device (22) to transition to or remain in one of a radio resource control, RRC,_Inactive state and RRC_Idle state if a predefined criterion is met; and
wherein the predefined criterion defines a predefined number of consecutive wake-up signal, WUS, occasions that have not been detected, or wherein the predefined criterion defines a predefined number of connected mode discontinuous reception, C_DRX, cycles during which physical downlink control channel data for the wireless device (22) has not been received.

**13.** The network node (16) of Claim 12, further configured to perform the steps of claim 8 or 9.

**Patentansprüche**

**1.** Verfahren, das von einer drahtlosen Vorrichtung (22) implementiert wird, die zum Kommunizieren mit einem Netzwerkknoten (16) konfiguriert ist, wobei das Verfahren umfasst:

Empfangen (S142) von Signalisierung, die damit assoziiert ist, die drahtlose Vorrichtung (22) zu veranlassen, in einen von einem Funkressourcensteuerungs-,RRC, Inactive-Zustand und einem RRC Idle-Zustand überzugehen oder darin zu verbleiben; und
Übergehen in einen oder Verbleiben in einem (S144) von einem Funkressourcensteuerungs-,RRC, Inactive-Zustand und einem RRC Idle-Zustand wenigstens zum Teil basierend auf der Signalisierung;
wobei die Signalisierung eine Konfiguration angibt, die so konfiguriert ist, dass sie die drahtlose Vorrichtung (22) veranlasst, in einen von einem Funkressourcensteuerungs-,RRC, Inactive-Zustand und einem RRC Idle-Zustand überzugehen oder darin zu verbleiben, wenn ein vordefiniertes Kriterium erfüllt wird; und
wobei das vordefinierte Kriterium eine vordefinierte Anzahl von aufeinanderfolgenden Wecksignal-,WUS-, Gelegenheiten definiert, die nicht detektiert wurde, oder

wobei das vordefinierte Kriterium eine vordefinierte Anzahl von Zyklen diskontinuierlichen Empfangs im verbundenen Modus, C_DRX, definiert, während derer keine Daten eines physikalischen Downlink-Steuerkanals für die drahtlose Vorrichtung (22) empfangen wurden.

2. Verfahren nach Anspruch 1, wobei die Signalisierung eine Inaktiv-Angabe umfasst, die dazu konfiguriert ist, die drahtlose Vorrichtung (22) zu veranlassen, in einen von einem Funkressourcensteuerungs-, RRC,_Inactive-Zustand und einem RRC_Idle-Zustand überzugehen oder darin zu verbleiben.

3. Verfahren nach Anspruch 2, wobei die Inaktiv-Angabe eine Go-to-inactive-,GTI-,Angabe ist, die in Downlink-Steuerinformationen, DCI, oder in einem MAC-CE enthalten ist.

4. Verfahren nach Anspruch 3, wobei die GTI-Angabe wenigstens zum Teil basierend auf einem Pufferstatus der drahtlosen Vorrichtung (22) signalisiert wird.

5. Verfahren nach einem der Ansprüche 1 bis 4, wobei der Übergang von einem Zustand diskontinuierlichen Empfangs im verbundenen Zustand, C_DRX, in einen von dem RRC_Inactive-Zustand und dem RRC_Idle-Zustand ist.

6. Verfahren nach einem der Ansprüche 1 bis 5, wobei der Übergang von einem RRC Connected-Zustand in den einen von dem RRC_Inactive-Zustand und dem RRC_Idle-Zustand ist.

7. Verfahren, das von Netzwerkknoten (16) implementiert wird, die zum Kommunizieren mit einer drahtlosen Vorrichtung (22) konfiguriert ist, wobei das Verfahren umfasst:

Veranlassen (S136) einer Übertragung von Signalisierung, die damit assoziiert ist, die drahtlose Vorrichtung (22) zu veranlassen, in einen von einem Funkressourcensteuerungs-,RRC,_Inactive-Zustand und einem RRC_Idle-Zustand überzugehen oder darin zu verbleiben;
wobei die Signalisierung eine Konfiguration angibt, die so konfiguriert ist, dass sie die drahtlose Vorrichtung (22) veranlasst, in einen von einem Funkressourcensteuerungs-,RRC, Inactive-Zustand und einem RRC Idle-Zustand überzugehen oder darin zu verbleiben, wenn ein vordefiniertes Kriterium erfüllt wird; und
wobei das vordefinierte Kriterium eine vordefinierte Anzahl von aufeinanderfolgenden Wecksignal-,WUS-, Gelegenheiten definiert, die nicht detektiert wurde, oder

wobei das vordefinierte Kriterium eine vordefinierte Anzahl von Zyklen diskontinuierlichen Empfangs im verbundenen Modus, C_DRX, definiert, während derer keine Daten eines physikalischen Downlink-Steuerkanals für die drahtlose Vorrichtung (22) empfangen wurden.

8. Verfahren nach Anspruch 7, ferner umfassend ein Empfangen einer Angabe, dass die drahtlose Vorrichtung (22) davon absehen soll, in den RRC Inactive-Modus überzugehen, basierend darauf, dass die drahtlose Vorrichtung (22) Daten zur Übertragung aufweist oder Daten zur Übertragung innerhalb eines vorbestimmten Zeitintervalls erwartet.

9. Verfahren nach Anspruch 7 oder 8, ferner umfassend ein Merkmal oder einen Schritt nach einem der Ansprüche 2 bis 6 oder ein Merkmal oder einen Schritt, das/der diesen entspricht.

10. Drahtlose Vorrichtung (22), konfiguriert zum Kommunizieren mit einem Netzwerkknoten (16), wobei die drahtlose Vorrichtung (22) Verarbeitungsschaltungsanordnung (68) umfasst, die konfiguriert ist zum:

Empfangen von Signalisierung, die damit assoziiert ist, die drahtlose Vorrichtung (22) zu veranlassen, in einen von einem Funkressourcensteuerungs-, RRC,_Inactive-Zustand und einem RRC Idle-Zustand überzugehen oder darin zu verbleiben; und
Übergehen in einen oder Verbleiben in einem von einem Funkressourcensteuerungs-,RRC, Inactive-Zustand und einem RRC Idle-Zustand wenigstens zum Teil basierend auf der Signalisierung;
wobei die Signalisierung eine Konfiguration angibt, die so konfiguriert ist, dass sie die drahtlose Vorrichtung (22) veranlasst, in einen von einem Funkressourcensteuerungs,-RRC, Inactive-Zustand und einem RRC Idle-Zustand überzugehen oder darin zu verbleiben, wenn ein vordefiniertes Kriterium erfüllt wird; und
wobei das vordefinierte Kriterium eine vordefinierte Anzahl von aufeinanderfolgenden Wecksignal-,WUS-, Gelegenheiten definiert, die nicht detektiert wurde, oder
wobei das vordefinierte Kriterium eine vordefinierte Anzahl von Zyklen diskontinuierlichen Empfangs im verbundenen Modus, C_DRX, definiert, während derer keine Daten eines physikalischen Downlink-Steuerkanals für die drahtlose Vorrichtung (22) empfangen wurden.

**11.** Drahtlose Vorrichtung (22) nach Anspruch 10, ferner konfiguriert zum Ausführen der Schritte nach einem der Ansprüche 2 bis 6.

**12.** Netzwerkknoten (16), konfiguriert zum Kommunizieren mit einer drahtlosen Vorrichtung (22), wobei der Netzwerkknoten (16) Verarbeitungsschaltungsanordnung (68) umfasst, die konfiguriert ist zum:

Veranlassen einer Übertragung von Signalisierung, die damit assoziiert ist, die drahtlose Vorrichtung (22) zu veranlassen, in einen von einem Funkressourcensteuerungs-,RRC, Inactive-Zustand und einem RRC Idle-Zustand überzugehen oder darin zu verbleiben;
wobei die Signalisierung eine Konfiguration angibt, die so konfiguriert ist, dass sie die drahtlose Vorrichtung (22) veranlasst, in einen von einem Funkressourcensteuerungs-,RRC, Inactive-Zustand und einem RRC Idle-Zustand überzugehen oder darin zu verbleiben, wenn ein vordefiniertes Kriterium erfüllt wird; und
wobei das vordefinierte Kriterium eine vordefinierte Anzahl von aufeinanderfolgenden Wecksignal-,WUS-,Gelegenheiten definiert, die nicht detektiert wurde, oder
wobei das vordefinierte Kriterium eine vordefinierte Anzahl von Zyklen diskontinuierlichen Empfangs im verbundenen Modus, C_DRX, definiert, während derer keine Daten eines physikalischen Downlink-Steuerkanals für die drahtlose Vorrichtung (22) empfangen wurden.

**13.** Netzwerkknoten (16) nach Anspruch 12, ferner konfiguriert zum Durchführen der Schritte nach Anspruch 8 oder 9.

## Revendications

**1.** Procédé mis en oeuvre par un dispositif sans fil (22) configuré pour communiquer avec un noeud de réseau (16), le procédé comprenant :

la réception (S142) d'une signalisation associée au fait d'amener le dispositif sans fil (22) à transitionner à ou à rester dans l'un parmi un état de commande de ressources radio, RRC, inactif, RRC_Inactive, et un état de RRC de veille, RRC_Idle ; et
la transition à ou le fait de rester dans (S144) l'un parmi un état RRC Inactive et un état RRC Idle sur la base au moins en partie de la signalisation ;
dans lequel la signalisation indique une configuration configurée pour amener le dispositif sans fil (22) à transitionner à ou à rester dans l'un parmi un état RRC_Inactive et un état RRC_Idle si un critère prédéfini est satisfait ; et dans lequel le critère prédéfini définit un nombre prédéfini d'occasions consécutives de signal de réveil, WUS, qui n'ont pas été détectées, ou dans lequel le critère prédéfini définit un nombre prédéfini de cycles de réception discontinue en mode connecté, C_DRX, au cours desquels des données de canal de commande de liaison descendante physique pour le dispositif sans fil (22) n'ont pas été reçues.

**2.** Procédé selon la revendication 1, dans lequel la signalisation inclut une indication inactive qui est configurée pour amener le dispositif sans fil (22) à transitionner à ou à rester dans l'un parmi un état RRC_Inactive et un état RRC_Idle.

**3.** Procédé selon la revendication 2, dans lequel l'indication inactive est une indication de devenir inactif, GTI, incluse dans des informations de commande de liaison descendante, DCI, ou dans un CE MAC.

**4.** Procédé selon la revendication 3, dans lequel l'indication GTI est signalée sur la base au moins en partie d'un statut de mémoire tampon du dispositif sans fil (22).

**5.** Procédé selon l'une quelconque des revendications 1 à 4, dans lequel la transition est d'un état de réception discontinue en mode connecté, C_DRX, à l'un parmi un état RRC_Inactive et un état RRC_Idle.

**6.** Procédé selon l'une quelconque des revendications 1 à 5, dans lequel la transition est d'un état RRC Connected à l'un parmi un état RRC_Inactive et un état RRC_Idle.

**7.** Procédé mis en oeuvre par un noeud de réseau (16) configuré pour communiquer avec un dispositif sans fil (22), le procédé comprenant :

le fait de provoquer (S136) une transmission d'une signalisation associée au fait d'amener le dispositif sans fil (22) à transitionner à ou à rester dans l'un parmi un état de commande de ressources radio, RRC, inactif, RRC_Inactive, et un état de RRC de veille, RRC_Idle ;
dans lequel la signalisation indique une configuration qui est configurée pour amener le dispositif sans fil (22) à transitionner à ou à rester dans l'un parmi un état RRC Inactive et un état RRC_Idle si un critère prédéfini est satisfait ; et dans lequel le critère prédéfini définit un nombre prédéfini d'occasions consécutives de signal de réveil, WUS, qui n'ont pas été détectées, ou dans lequel le critère prédéfini définit un nombre prédéfini de cycles de réception discontinue en mode connecté, C_DRX, au cours desquels des données de canal de commande de liaison descendante physique pour le dispositif sans fil (22) n'ont pas été reçues.

8. Procédé selon la revendication 7, comprenant en outre la réception d'une indication que le dispositif sans fil (22) s'abstient de transitionner dans le mode RRC_Inactive sur la base du fait que soit le dispositif sans fil (22) a des données à transmettre soit il attend des données à transmettre au cours d'un intervalle de temps prédéterminé.

9. Procédé selon la revendication 7 ou 8, comprenant en outre toute caractéristique ou étape selon l'une quelconque des revendications 2 à 6, ou toute caractéristique ou étape lui correspondant.

10. Dispositif sans fil (22) configuré pour communiquer avec un noeud de réseau (16), le dispositif sans fil (22) comprenant une circuiterie de traitement (68) configurée pour :

recevoir une signalisation associée au fait d'amener le dispositif sans fil (22) à transitionner à ou à rester dans l'un parmi un état de commande de ressources radio, RRC, inactif, RRC_Inactive, et un état de RRC de veille, RRC_Idle ; et

transitionner à ou rester dans l'un parmi un état RRC_Inactive et un état RRC_Idle sur la base au moins en partie de la signalisation ;

dans lequel la signalisation indique une configuration configurée pour amener le dispositif sans fil (22) à transitionner à ou à rester dans l'un parmi un état RRC_Inactive et un état RRC_Idle si un critère prédéfini est satisfait ; et

dans lequel le critère prédéfini définit un nombre prédéfini d'occasions consécutives de signal de réveil, WUS, qui n'ont pas été détectées, ou dans lequel le critère prédéfini définit un nombre prédéfini de cycles de réception discontinue en mode connecté, C_DRX, au cours desquels des données de canal de commande de liaison descendante physique pour le dispositif sans fil (22) n'ont pas été reçues.

11. Dispositif sans fil (22) selon la revendication 10, configuré en outre pour réaliser les étapes selon l'une quelconque des revendications 2 à 6.

12. Noeud de réseau (16) configuré pour communiquer avec un dispositif sans fil (22), le noeud de réseau (16) comprenant une circuiterie de traitement (68) configurée pour :

provoquer une transmission d'une signalisation associée au fait d'amener le dispositif sans fil (22) à transitionner à ou à rester dans l'un parmi un état de commande de ressources radio, RRC, inactif, RRC_Inactive, et un état de RRC de veille, RRC_Idle ;

dans lequel la signalisation indique une configuration qui est configurée pour amener le dispositif sans fil (22) à transitionner à ou à rester dans l'un parmi un état RRC_Inactive et un état RRC_Idle si un critère prédéfini est satisfait ; et

dans lequel le critère prédéfini définit un nombre prédéfini d'occasions consécutives de signal de réveil, WUS, qui n'ont pas été détectées, ou dans lequel le critère prédéfini définit un nombre prédéfini de cycles de réception discontinue en mode connecté, C_DRX, au cours desquels des données de canal de commande de liaison descendante physique pour le dispositif sans fil (22) n'ont pas été reçues.

13. Noeud de réseau (16) selon la revendication 12, configuré en outre pour réaliser les étapes selon la revendication 8 ou 9.

One resource element

$\Delta f = 15\ kHz$

One OFDM symbol including cyclic prefix

FIG. 1

Short DRX is optionally
configured by network
Duration of this complete period
is multiplication factor (called drx-
ShortCycleTimer) of short DRX
cycles

PDCCH Decoding according to CORESET/Search
Space cfg used in connected mode

One configuration applies to both long
and short DRX

Short DRX cycles
Cycles are of length
[2.640] ms

Long DRX cycles
Cycles are of length
[10...10240] ms

Inactivity Timer is (re)started after
each allocation

Inactivity
Timer

On-
Duration

On-
Duration

Connected

RRC State Transition

In case there is no
allocation to WD during
onDurations, WD goes
back to DRX

Idle/Inactive

In case there is no
allocation to WD during
this period, WD enters
DRX

In case there is no allocation to
WD during this period, WD enters
long DRX.

If allocation, WD starts inactivity
Timer as in the beginning

WD stays in long DRX until
allocation makes WD starting
inactivity Timer as in beginning

Network may reconfigure
(remove C-DRX) or releases WD

FIG. 2

*10*

*26*

*30*

*12*

*16c*

*18a*

Inactive Unit
*32*

*14*

*24*

*28*

*20*

*16b*

*18c*

RRC Unit *34*

*22a*

*18b*

*22b*

*16a*

FIG. 3

FIG. 4

BEGIN

S100
Host computer provides user data

↔

S102
Host computer executes host application

S104
Host computer initiates transmission carrying the user data to the WD

S106
Network Node transmits the user data

S108
WD executes client application

END

FIG. 5

BEGIN

S110
Host computer provides user data

S112
Host computer initiates transmission carrying the user data to the WD

S114
WD receives the user data

END

FIG. 6

BEGIN

S116
WD receives input data provided at host computer

S118
WD executes client application

S120
WD provides user data

S122
WD executes client application

S124
WD initiates transmission of the user data to the host computer

S126
Host computer receives user data transmitted from the WD

END

FIG. 7

BEGIN

S128
Network Node receives user data from WD

S130
Network Node initiates transmission of user data to the host computer

S132
Host computer receives the user data

END

FIG. 8

```
                    ┌─────────────┐
                    │    BEGIN    │
                    └──────┬──────┘
                           │
                           ▼
  ┌────────────────────────────────────────────────────────┐
  │  Signal a configuration to the WD to cause the WD to    │
  │  transition to or remain in an RRC_Inactive state if a  │
  │  predefined criterion is met                            │
  │                     Block S134                          │
  └────────────────────────┬───────────────────────────────┘
                           │
                           ▼
                    ┌─────────────┐
                    │     END     │
                    └─────────────┘
```

## FIG. 9

```
                    ┌─────────────┐
                    │    BEGIN    │
                    └──────┬──────┘
                           │
                           ▼
  ┌────────────────────────────────────────────────────────┐
  │  Cause transmission of signaling associated with        │
  │  causing the wireless device to transition to or remain │
  │  in one of a radio resource control, RRC,_Inactive      │
  │  state and RRC_Idle state                               │
  │                     Block S136                          │
  └────────────────────────┬───────────────────────────────┘
                           │
                           ▼
                    ┌─────────────┐
                    │     END     │
                    └─────────────┘
```

## FIG. 10

BEGIN

Determine whether to transmit an inactive indication that is configured to cause the wireless device to transition to or remain in an RRC_inactive state if data is not scheduled for the wireless device
S138

Signal an inactive indication to the wireless device based on the determination
S140

END

FIG. 11

BEGIN

Receive signaling associated with causing the wireless device to transition to or remain in one of a RRC_Inactive state and RRC_Idle state
S142

Transition to or remain in one of the RRC_Inactive state and RRC_Idle state based on the signaling
S144

END

FIG. 12

After N consecutive non-WUS/simple DCI detections, WD
goes to inactive

Freq

$-- -$DRX state (e.g. C-DRX, RRC Inactive, RRC Idle)$-- -//--------$ RRC Inactive $·------/$

WD goes to Inactive/Idle
Without any RRC signaling reception
transmission

N_occasions:
Configurable by RRC

Time

FIG. 13

BEGIN

WD is configured to perform state transition to RRC_Inactive either after N C-DRX cycles with no scheduling DCI detection, or with an inactivity timer or with no WUS detection after M WUS occasions
S150

The WD does not detect a DCI/WUS after N C-DRX cycles or inactivity timer expires or M WUS occasions
S152

WD transitions to RRC_Inactive
S154

END

FIG. 14

FIG. 15

BEGIN

Receive configuration for GTI-DCI
S162

Monitor PDCCH looking for GTI-DCI
S164

Check If GTI-DCI is received
S166

Transition to RRC_Inactive if GTI-DCI is received
S168

END

FIG. 16

**EP 3 857 986 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018131956 A1
- US 2019166553 A1
- EP 3487258 A1